# EUROPEAN PATENT APPLICATION

(11) **EP 4 838 609 A1**
(43) Date of publication of application: **11.11.2026**
(21) Application number: 25752209.4
(22) Date of filing: 06.02.2025
(51) Int. Cl.: H01M 10/0569, H01G 11/30, H01G 11/60, H01G 11/62, H01G 11/84, H01M 4/38, H01M 4/136, H01M 10/052, H01M 10/058, H01M 10/0568

(54) **NON-AQUEOUS ELECTROLYTE POWER STORAGE ELEMENT AND MANUFACTURING METHOD FOR NON-AQUEOUS ELECTROLYTE POWER STORAGE ELEMENT**

(30) Priority: 09.02.2024 JP 2024018940; 26.08.2024 JP 2024145018; 26.08.2024 JP 2024145019; 26.08.2024 JP 2024145020
(71) Applicant: GS Yuasa International Ltd., Kisshoin, Minami-ku, Kyoto-shi, Kyoto 601-8520 (JP)
(72) Inventor: FUJISAWA Tomoki, Kyoto-shi, Kyoto 601-8520 (JP); KISHIMOTO Akira, Kyoto-shi, Kyoto 601-8520 (JP)
(74) Representative: Isarpatent
(86) International application number: PCT/JP2025/003886
(87) International publication number: WO 2025/169984

(57) **Abstract**

A non-aqueous electrolyte energy storage device according to one aspect of the present invention includes: a positive electrode containing a sulfur-based active material; and a non-aqueous electrolyte containing an electrolyte salt, an ionic liquid, and a non-aqueous solvent, wherein the non-aqueous solvent contains a fluorinated cyclic ether.

## Description

### TECHNICAL FIELD

The present invention relates to a non-aqueous electrolyte energy storage device and a method for manufacturing a non-aqueous electrolyte energy storage device.

### BACKGROUND ART

Non-aqueous electrolyte secondary batteries, typified by lithium-ion secondary batteries, are widely used in electronic devices such as personal computers and communication terminals, automobiles, and the like, because of their high energy density. A non-aqueous electrolyte secondary battery generally includes a pair of electrodes electrically isolated by a separator and a non-aqueous electrolyte interposed between the electrodes, and is configured to charge and discharge by transferring charge transport ions such as lithium ions between both electrodes. As non-aqueous electrolyte energy storage devices other than non-aqueous electrolyte secondary batteries, capacitors such as lithium-ion capacitors and electric double-layer capacitors are also widely used.

As a non-aqueous electrolyte energy storage device, a non-aqueous electrolyte energy storage device in which a sulfur-based active material is used as a positive electrode active material, such as a lithium-sulfur battery (Li-S battery), is known (see Patent Literature 1). In recent years, studies have also progressed on non-aqueous electrolyte energy storage devices using an ionic liquid as a non-aqueous electrolyte (see Patent Literature 2). An ionic liquid is also referred to as a room-temperature molten salt or the like, and has advantages such as having substantially no volatility and having high flame retardancy while being liquid themselves at room temperature.

### CITATION LIST

### Patent Literature

Patent Literature 1: Japanese Unexamined Patent Application Publication No. 2010-95390
Patent Literature 2: Japanese Unexamined Patent Application Publication No. 2001-319688

### DISCLOSURE OF INVENTION

### PROBLEMS TO BE SOLVED BY THE INVENTION

Sulfur-based active materials have a large theoretical capacity, and non-aqueous electrolyte energy storage devices in which a sulfur-based active material is used as a positive electrode active material are expected as energy storage devices having a high energy density. Even in a non-aqueous electrolyte energy storage device including a positive electrode in which a sulfur-based active material is used, further improvement in discharge capacity and the like is expected. On the other hand, a non-aqueous electrolyte energy storage device using an ionic liquid may not be able to exhibit sufficient charge-discharge performance due to the high viscosity of the ionic liquid or the like.

An object of the present invention is to provide a non-aqueous electrolyte energy storage device that uses a positive electrode containing a sulfur-based active material and a non-aqueous electrolyte containing an ionic liquid and that has a large discharge capacity, and a method for manufacturing such a non-aqueous electrolyte energy storage device.

### MEANS FOR SOLVING THE PROBLEMS

A non-aqueous electrolyte energy storage device according to one aspect of the present invention includes: a positive electrode containing a sulfur-based active material; and a non-aqueous electrolyte containing an electrolyte salt, an ionic liquid, and a non-aqueous solvent, wherein the non-aqueous solvent contains a fluorinated cyclic ether.

A method for manufacturing a non-aqueous electrolyte energy storage device according to another aspect of the present invention includes preparing a positive electrode containing a sulfur-based active material, and preparing a non-aqueous electrolyte containing an electrolyte salt, an ionic liquid, and a non-aqueous solvent, wherein the non-aqueous solvent contains a fluorinated cyclic ether.

### EFFECT OF THE INVENTION

According to one aspect of the present invention, it is possible to provide a non-aqueous electrolyte energy storage device that uses a positive electrode containing a sulfur-based active material and a non-aqueous electrolyte containing an ionic liquid and that has a large discharge capacity, and a method for manufacturing such a non-aqueous electrolyte energy storage device.

### BRIEF DESCRIPTION OF THE DRAWINGS

Fig. 1 is a perspective view illustrating a non-aqueous electrolyte energy storage device according to one embodiment of the present invention.
Fig. 2 is a schematic view illustrating an energy storage apparatus including a plurality of non-aqueous electrolyte energy storage devices according to one embodiment of the present invention.

### DESCRIPTION OF EMBODIMENTS

First, an outline of a non-aqueous electrolyte energy storage device and a method for manufacturing a non-aqueous electrolyte energy storage device disclosed in the present specification will be described.
[1] A non-aqueous electrolyte energy storage device according to one aspect of the present invention includes a positive electrode containing a sulfur-based active material, and a non-aqueous electrolyte containing an electrolyte salt, an ionic liquid, and a non-aqueous solvent, wherein the non-aqueous solvent contains a fluorinated cyclic ether.

The non-aqueous electrolyte energy storage device described in [1] above is a non-aqueous electrolyte energy storage device in which a positive electrode containing a sulfur-based active material and a non-aqueous electrolyte containing an ionic liquid are used, and has a large discharge capacity. Although the reason for this is not clear, the following reason is presumed. One reason why the discharge capacity does not become sufficiently large in a non-aqueous electrolyte energy storage device using a non-aqueous electrolyte containing an ionic liquid is that the non-aqueous electrolyte containing the ionic liquid has a high viscosity and the diffusivity of charge transport ions is low. Therefore, it is conceivable to reduce the viscosity of the non-aqueous electrolyte by adding an appropriate non-aqueous solvent to the non-aqueous electrolyte containing the ionic liquid. However, depending on the type of the non-aqueous solvent to be added, polysulfides (Li₂Sₓ) that can be formed at the positive electrode tend to dissolve into the non-aqueous electrolyte, so that the discharge capacity does not become sufficiently large. In contrast, in the case of the non-aqueous electrolyte energy storage device described in [1] above, the non-aqueous electrolyte contains a fluorinated cyclic ether together with the ionic liquid. The fluorinated cyclic ether is a solvent having a sufficiently lower viscosity than the ionic liquid and a relatively small donor number, and it is considered that the non-aqueous electrolyte containing such a fluorinated cyclic ether has a sufficiently reduced viscosity despite being a non-aqueous electrolyte containing an ionic liquid, and can also suppress dissolution of polysulfides into the non-aqueous electrolyte. For these reasons, it is presumed that the non-aqueous electrolyte energy storage device described in [1] above, in which a positive electrode containing a sulfur-based active material and a non-aqueous electrolyte containing an ionic liquid are used, has a large discharge capacity.

In the present specification, the content of each component contained in the non-aqueous electrolyte is defined as a value measured at 20 °C and 1 atm, or a value converted to the value at 20 °C and 1 atm.

The types of ionic compounds such as an electrolyte salt and an ionic liquid contained in the non-aqueous electrolyte are identified by carrying out, in combination as necessary, analyses selected from ion chromatography (IC), liquid chromatography-mass spectrometry (LC-MS), ¹H-NMR, multinuclear NMR, and the like.

The content of ionic compounds such as an electrolyte salt and an ionic liquid contained in the non-aqueous electrolyte is determined by IC. However, the content of cations of the ionic liquid contained in the non-aqueous electrolyte is determined by LC-MS. If the content cannot be determined by LC-MS, it is determined by an internal standard method using ¹H-NMR.

Specifically, IC measurement is performed as follows.

### (A1) Collection of non-aqueous electrolyte

First, the non-aqueous electrolyte energy storage device is subjected to constant-current charging at a current of 0.1 C until an end-of-charge voltage under normal use is reached, thereby bringing the device into a fully charged state. Here, the term "normal use" refers to a case where the non-aqueous electrolyte energy storage device is used by adopting charge-discharge conditions recommended or specified for the non-aqueous electrolyte energy storage device, and, when equipment for using the non-aqueous electrolyte energy storage device is prepared, refers to a case where the non-aqueous electrolyte energy storage device is used by applying with such equipment. "A current of 1 C" refers to a current at which the theoretical capacity of the non-aqueous electrolyte energy storage device can be discharged in 1 hour. The theoretical capacity of the non-aqueous electrolyte energy storage device is the theoretical capacity of the positive electrode when the theoretical capacity of the positive electrode is smaller than the theoretical capacity of the negative electrode, and is the theoretical capacity of the negative electrode when the theoretical capacity of the negative electrode is smaller than the theoretical capacity of the positive electrode. The theoretical capacity of the positive electrode is calculated from the product of the capacity density per unit area of one positive electrode active material layer and the area of the positive electrode active material layer. The capacity density per unit area of one positive electrode active material layer is calculated from the product of the mass per unit area (g/cm²) of the positive electrode active material layer, the content (% by mass) of the positive electrode active material in the positive electrode active material layer, and the theoretical capacity (mAh/g) of the positive electrode active material. The theoretical capacity of the negative electrode is calculated according to the calculation method for the theoretical capacity of the positive electrode.

Next, the non-aqueous electrolyte energy storage device in this fully charged state is disassembled to recover the non-aqueous electrolyte. If the non-aqueous electrolyte cannot be recovered, the non-aqueous electrolyte is recovered by subjecting the non-aqueous electrolyte energy storage device to centrifugation. If the non-aqueous electrolyte cannot be recovered even by centrifugation, an appropriate extraction solvent (for example, acetonitrile) is injected into the non-aqueous electrolyte energy storage device, and the non-aqueous electrolyte diluted with the extraction solvent is recovered.

### (A2) IC analysis

Components of the collected non-aqueous electrolyte are analyzed by IC. IC analysis is performed in the following order: qualitative analysis and quantitative analysis.

### (Qualitative analysis)

A measurement sample (non-aqueous electrolyte) is subjected to IC analysis. Components contained in the measurement sample are predicted from peak positions of respective peaks of the obtained ion chromatogram. Known samples of the predicted components (hereinafter referred to as "predicted components") are subjected to IC analysis. Retention times of peaks corresponding to the respective predicted components in the measurement sample are compared with retention times of peaks of known samples of the respective predicted components, and if they match, the above prediction is presumed to be correct.

### (Quantitative analysis)

Quantitative analysis is performed by a calibration curve method. First, a known sample of a predicted component having a known concentration is subjected to IC analysis to determine a peak area, and a calibration curve is prepared. The calibration curve is prepared such that the coefficient of determination (r²) is 0.999 or more and 1 or less. The content of the predicted component in the measurement sample is determined from the calibration curve and the peak area of the predicted component of the measurement sample. The above operation is performed for all peaks detected in the IC analysis of the measurement sample, and the content of each predicted component is determined. Note that, in order to suppress measurement-to-measurement variation in measurement error, the quantitative analysis is performed on the same day using the same apparatus under the same conditions unless there are special circumstances, and replacement of consumables, adjustment of the apparatus, and the like are not carried out until all measurements are completed. In the present specification, the same applies to other quantitative analyses.

The types and contents of non-ionic compounds such as a non-aqueous solvent contained in the non-aqueous electrolyte are identified by liquid chromatography-mass spectrometry (LC-MS) and gas chromatography-mass spectrometry (GC-MS). However, if it is difficult to identify the types of non-ionic compounds by the above-mentioned analyses, they are identified by carrying out, in combination as necessary, analyses selected from ¹H-NMR, multinuclear NMR, and other analyses. Specifically, LC-MS and GC-MS measurements are performed as follows.

### (B1) Collection of non-aqueous electrolyte

The non-aqueous electrolyte is recovered in the same procedure as in the above "(A1) Collection of non-aqueous electrolyte".

### (B2) LC-MS

Components of the collected non-aqueous electrolyte are analyzed by LC-MS. LC-MS analysis is performed in the following order: qualitative analysis and quantitative analysis. As apparatuses for LC-MS analysis, "Acquity H" and "Xevo G2-5QTof" manufactured by Waters are used. Water is used as an eluent. Note that, if it is difficult to perform measurement using the above-mentioned models of the measuring apparatus, measurement can be performed using other models that are considered to yield equivalent measurement results. In the present specification, the same applies to other measuring apparatuses.

### (Qualitative analysis)

A measurement sample (non-aqueous electrolyte) is subjected to LC-MS analysis. When peaks of the obtained liquid chromatogram cannot be separated, GC-MS analysis described below is performed instead of LC-MS analysis. When the peaks are separated, components contained in the measurement sample are predicted from the MS spectrum of each peak obtained by LC-MS analysis. A known sample of the predicted component is subjected to LC-MS analysis. Retention times and MS spectra of peaks corresponding to the respective predicted components in the measurement sample are compared with retention times and MS spectra of peaks of known samples of the respective predicted components, and if they match, the above prediction is presumed to be correct.

### (Quantitative analysis)

Quantitative analysis is performed by a calibration curve method. Quantitative analysis by LC-MS is performed in the same procedure as the above-mentioned quantitative analysis by IC to determine the content of each predicted component.

### (B3) GC-MS

Analysis by GC-MS is performed in the following order: qualitative analysis and quantitative analysis. As the apparatus for GC-MS analysis, "5975C" manufactured by Agilent is used. Argon is used as a carrier gas.

### (Qualitative analysis)

A measurement sample (non-aqueous electrolyte) is subjected to GC-MS analysis. Components contained in the sample are predicted from the MS spectrum of each peak of the obtained gas chromatogram. A known sample of the predicted component is subjected to GC-MS analysis. Retention times and MS spectra of peaks corresponding to the predicted components in the measurement sample are compared with retention times and MS spectra of peaks of known samples of the respective predicted components, and if they match, the above prediction is estimated to be correct.

### (Quantitative analysis)

Quantitative analysis is performed by a calibration curve method. Quantitative analysis by GC-MS is performed according to the same procedure as the above-mentioned quantitative analysis by IC to determine the content of each predicted component.

[2] In the non-aqueous electrolyte energy storage device described in [1] above, the total content of the ionic liquid and the fluorinated cyclic ether based on the total of the ionic liquid and the non-aqueous solvent may be 10% by volume or more.

The non-aqueous electrolyte energy storage device described in [2] above has a larger discharge capacity.

[3] In the non-aqueous electrolyte energy storage device described in [1] or [2] above, the fluorinated cyclic ether may be represented by the following formula (1).

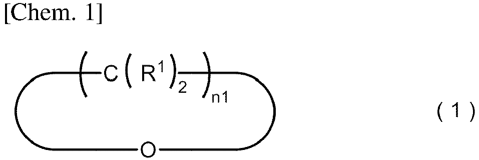

(In formula (1), each R¹ is independently a hydrogen atom, a fluorine atom, an alkyl group having 1 to 4 carbon atoms, or a fluorinated alkyl group having 1 to 4 carbon atoms. Provided that at least one of the plurality of R¹ is a fluorine atom or a fluorinated alkyl group having 1 to 4 carbon atoms. n1 is an integer of 2 to 5.)

The non-aqueous electrolyte energy storage device described in [3] above has a larger discharge capacity.

[4] In the non-aqueous electrolyte energy storage device described in any one of [1] to [3] above, the non-aqueous solvent may further contain another non-aqueous solvent.

The non-aqueous electrolyte energy storage device described in [4] above is a non-aqueous electrolyte energy storage device in which a positive electrode containing a sulfur-based active material and a non-aqueous electrolyte containing an ionic liquid are used, and exhibits excellent high-rate discharge performance. Although the reason for this is not clear, the following reasons are presumed. Since the non-aqueous electrolyte containing the ionic liquid has a high viscosity and low diffusivity of charge transport ions, the non-aqueous electrolyte energy storage device using the non-aqueous electrolyte containing the ionic liquid may not exhibit sufficient charge-discharge performance. In contrast, the inventors have found that the charge-discharge performance (discharge capacity, capacity retention ratio after charge-discharge cycles, etc.) of a non-aqueous electrolyte energy storage device can be improved by further adding the fluorinated cyclic ether represented by formula (1) above to the non-aqueous electrolyte containing an ionic liquid. This is considered to be because the fluorinated cyclic ether has a lower viscosity than the ionic liquid and is a solvent with a relatively small donor number, and a non-aqueous electrolyte containing such a fluorinated cyclic ether has its viscosity reduced to some extent while being a non-aqueous electrolyte containing an ionic liquid, and can also suppress dissolution of polysulfides from the positive electrode into the non-aqueous electrolyte, the dissolution affecting the charge-discharge performance. However, when only the above-mentioned fluorinated cyclic ether is used as the non-aqueous solvent, the discharge capacity during discharge at a high current tends to decrease easily (the high-rate discharge performance is not sufficient). In contrast, in the non-aqueous electrolyte energy storage device described in [4] above, the non-aqueous electrolyte further contains another non-aqueous solvent together with the ionic liquid and the fluorinated cyclic ether. It is considered that the presence of this other non-aqueous solvent further reduces the viscosity of the non-aqueous electrolyte and improves the diffusivity of charge transport ions in the non-aqueous electrolyte. Therefore, it is presumed that the non-aqueous electrolyte energy storage device described in [4] above, which uses a positive electrode containing a sulfur-based active material and a non-aqueous electrolyte containing an ionic liquid, exhibits excellent high-rate discharge performance.

[5] In the non-aqueous electrolyte energy storage device described in [4] above, the donor number of the other non-aqueous solvent may be 14 or more and 30 or less.

The donor number is a parameter representing the electron pair donating ability of a solvent, and is defined as the negative value of the formation enthalpy of a 1:1 addition compound between antimony pentachloride in 1,2-dichloroethane and the solvent of interest. In the present specification, the donor number adopts a value determined by the same method as that described in Viktor Gutmann, "The Donor-Acceptor Approach to Molecular Interactions", Springer, 1978 (ISBN-13: 978-0306310645), except that boron trifluoride is selected as the Lewis acid.

[6] In the non-aqueous electrolyte energy storage device described in [4] or [5] above, the viscosity of the other non-aqueous solvent at 25 °C may be less than 1.0 mPa·s.

[7] In the non-aqueous electrolyte energy storage device described in any one of [1] to [6] above, the non-aqueous solvent may further contain at least one selected from the group consisting of a non-fluorinated cyclic ether and a chain ether.

The non-aqueous electrolyte energy storage device described in [7] above exhibits excellent high-rate discharge performance in addition to a large discharge capacity.

[8] In the non-aqueous electrolyte energy storage device described in [7] above, the total content of the non-fluorinated cyclic ether and the chain ether based on the total of the ionic liquid and the non-aqueous solvent may be 90% by volume or less.

The non-aqueous electrolyte energy storage device described in [8] above has a larger discharge capacity and also exhibits superior high-rate discharge performance.

[9] In the non-aqueous electrolyte energy storage device described in [7] or [8] above, the non-fluorinated cyclic ether may be represented by the following formula (2), and the chain ether may be represented by the following formula (3).

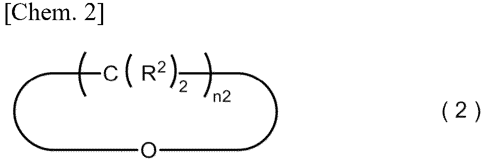

(In formula (2), each R² is independently a hydrogen atom or an alkyl group having 1 to 4 carbon atoms. n2 is an integer of 2 to 5.)

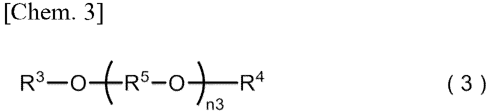

(In formula (3), each of R³ and R⁴ is independently an alkyl group having 1 to 3 carbon atoms or a fluorinated alkyl group having 1 to 3 carbon atoms. R⁵ is an alkanediyl group having 1 to 3 carbon atoms. n3 is 0 or 1.)

The non-aqueous electrolyte energy storage device described in [9] above exhibits further superior high-rate discharge performance.

[10] In the non-aqueous electrolyte energy storage device described in any one of [1] to [9] above, the ionic liquid may have at least one selected from the group consisting of a quaternary ammonium cation, an imidazolium-based cation, a pyrrolidinium-based cation, a piperidinium-based cation, a quaternary phosphonium cation, and a sulfonium cation.

[11] In the non-aqueous electrolyte energy storage device described in any one of [1] to [10] above, the ionic liquid may have an imide anion.

[12] In the non-aqueous electrolyte energy storage device described in any one of [1] to [11] above, the electrolyte salt may be an imide salt.

Each of the non-aqueous electrolyte energy storage devices described in [10] to [12] above is a preferred embodiment of the present invention and has a larger discharge capacity.

[13] In the non-aqueous electrolyte energy storage device described in any one of [1] to [12] above, the positive electrode may have a positive electrode active material layer containing the sulfur-based active material, and a mass per unit area of the positive electrode active material layer may be 5 mg/cm² or more.

In the non-aqueous electrolyte energy storage device described in [13] above, the energy density of the non-aqueous electrolyte energy storage device can be increased because the mass per unit area of the positive electrode active material layer containing the sulfur-based active material is 5 mg/cm² or more. Further, the non-aqueous electrolyte energy storage device described in [13] above can achieve both high energy density and large discharge capacity.

The "mass per unit area (mg/cm²) of the positive electrode active material layer" is the mass (mg) of the positive electrode active material layer per area (1 cm²) of the positive electrode active material layer. The area of the positive electrode active material layer refers to the area of one of the front and back surfaces (two surfaces other than side surfaces) of one positive electrode active material layer. That is, for example, when the positive electrode active material layer is provided by coating, the area of the positive electrode active material layer is equal to the area on which the positive electrode active material layer is coated. When the positive electrode active material layer is provided on both sides of the positive electrode substrate, the area and mass of the positive electrode active material layer are the area and mass of one positive electrode active material layer. For example, when the positive electrode active material layers are provided on both sides of the positive electrode substrate at a coating amount of 10 mg/cm² (on a solid content basis), the "mass per unit area of the positive electrode active material layer" is 10 mg/cm². Even when the positive electrode active material layer is provided on one side of the positive electrode substrate at a coating amount of 10 mg/cm² (on a solid content basis), the "mass per unit area of the positive electrode active material layer" is also 10 mg/cm².

The "mass per unit area (mg/cm²) of the positive electrode active material layer" is a value measured with the non-aqueous electrolyte energy storage device in a fully charged state. However, if measurement in the fully charged state is difficult for technical or safety reasons, a value obtained by converting the measurement result in a discharged state to the fully charged state is used.

[14] In the non-aqueous electrolyte energy storage device described in any one of [1] to [13] above, a negative electrode containing metallic lithium at least in a charged state may be further provided.

The non-aqueous electrolyte energy storage device described in [14] above has advantages such as a particularly high energy density because metallic lithium is used in the negative electrode.

[15] In the non-aqueous electrolyte energy storage device described in any one of [1] to [14] above, the content of the ionic liquid based on the total of the ionic liquid and the non-aqueous solvent may be 5% by volume or more and 90% by volume or less.

[16] In the non-aqueous electrolyte energy storage device described in any one of [1] to [15] above, the content of the fluorinated cyclic ether based on the total of the ionic liquid and the non-aqueous solvent may be 5% by volume or more and 90% by volume or less.

[17] In the non-aqueous electrolyte energy storage device described in any one of [7] to [16] above, the total content of the non-fluorinated cyclic ether and the chain ether based on the total of the ionic liquid and the non-aqueous solvent may be 5% by volume or more and 90% by volume or less.

[18] In the non-aqueous electrolyte energy storage device described in any one of [1] to [17] above, the molality of the electrolyte salt in the non-aqueous electrolyte may be 0.3 mol/kg or more and 3.5 mol/kg or less.

Each of the non-aqueous electrolyte energy storage devices described in [15] to [18] above is a preferred embodiment of the present invention and has a larger discharge capacity.

[19] A method for manufacturing a non-aqueous electrolyte energy storage device according to another aspect of the present invention includes preparing a positive electrode containing a sulfur-based active material, and preparing a non-aqueous electrolyte containing an electrolyte salt, an ionic liquid, and a non-aqueous solvent, wherein the non-aqueous solvent contains a fluorinated cyclic ether.

According to the method for manufacturing a non-aqueous electrolyte energy storage device described in [19] above, it is possible to manufacture a non-aqueous electrolyte energy storage device that uses a positive electrode containing a sulfur-based active material and a non-aqueous electrolyte containing an ionic liquid and that has a large discharge capacity.

[20] In the method for manufacturing a non-aqueous electrolyte energy storage device described in [19] above, the non-aqueous solvent may further contain a fluorinated cyclic ether represented by the following formula (1) and another non-aqueous solvent.

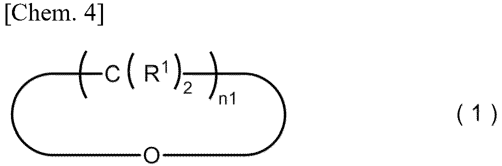

(In formula (1), each R¹ is independently a hydrogen atom, a fluorine atom, an alkyl group having 1 to 4 carbon atoms, or a fluorinated alkyl group having 1 to 4 carbon atoms. Provided that at least one of the plurality of R¹ is a fluorine atom or a fluorinated alkyl group having 1 to 4 carbon atoms. n1 is an integer of 2 to 5.)

According to the method for manufacturing a non-aqueous electrolyte energy storage device described in [20] above, it is possible to manufacture a non-aqueous electrolyte energy storage device, in which a positive electrode containing a sulfur-based active material and a non-aqueous electrolyte containing an ionic liquid are used and which exhibits superior high-rate discharge performance.

A non-aqueous electrolyte energy storage device, a method for manufacturing a non-aqueous electrolyte energy storage device, an energy storage apparatus, and other embodiments according to one embodiment of the present invention will be described in detail below.

### <Non-Aqueous Electrolyte Energy Storage Device>

A non-aqueous electrolyte energy storage device according to one embodiment of the present invention includes a positive electrode, a negative electrode, a non-aqueous electrolyte, and a container for housing them. The non-aqueous electrolyte energy storage device may further include a separator that is interposed between the positive electrode and the negative electrode to electrically insulate the positive electrode from the negative electrode. The positive electrode, the negative electrode, and an optional separator usually constitute an electrode body. At least a part of the non-aqueous electrolyte is usually present in a state of being impregnated into the electrode body. The non-aqueous electrolyte energy storage device according to one embodiment of the present invention may further include other members.

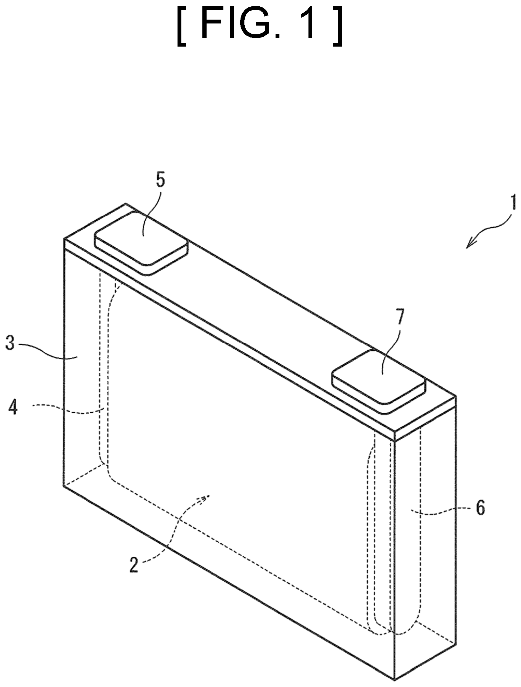

For example, a non-aqueous electrolyte energy storage device 1 according to one embodiment of the present invention and illustrated in Fig. 1 includes an electrode body 2, a non-aqueous electrolyte (not illustrated), and a rectangular parallelepiped-shaped container 3 for housing them. The non-aqueous electrolyte energy storage device 1 of Fig. 1 further includes a positive electrode lead 4, a positive electrode external terminal 5, a negative electrode lead 6, and a negative electrode external terminal 7. The positive electrode lead 4 and the negative electrode lead 6 are housed in the container 3 together with the electrode body 2 and the like. The positive electrode external terminal 5 and the negative electrode external terminal 7 are provided outside the container 3. The positive electrode constituting the electrode body 2 is electrically connected to the positive electrode external terminal 5 via the positive electrode lead 4. The negative electrode constituting the electrode body 2 is electrically connected to the negative electrode external terminal 7 via the negative electrode lead 6.

The non-aqueous electrolyte energy storage device of the present invention may be a non-aqueous electrolyte secondary battery. Hereinafter, main members and the like constituting the non-aqueous electrolyte energy storage device according to one embodiment of the present invention will be described in detail, focusing on a case where the non-aqueous electrolyte energy storage device is a non-aqueous electrolyte secondary battery (particularly a lithium-ion secondary battery), but this is not intended to limit the subject matter to which the present invention is applied.

Note that both the lower limit and the upper limit of each numerical range described in the embodiments of the present invention can be arbitrarily combined (provided that the upper limit is larger than the lower limit). With respect to the lower limit and the upper limit of each numerical range, unless otherwise specified, the numerical range means that the lower limit and the upper limit are included therein. That is, the lower limit "is A" means A or more. Similarly, the upper limit "is B" means B or less. The lower limit and the upper limit of each numerical range are values when the non-aqueous electrolyte energy storage device is in a fully charged state, unless otherwise specified.

### (Positive Electrode)

The positive electrode has a positive electrode substrate and a positive electrode active material layer laminated directly on the positive electrode substrate or laminated thereon via an intermediate layer. Usually, the positive electrode has a part where the positive electrode substrate is exposed. The part where the positive electrode substrate is exposed is usually connected to the positive electrode lead described above. The positive electrode may have, for example, a shape such as a sheet, a plate, or a strip.

The thickness of the positive electrode is appropriately set according to the application and the like of the non-aqueous electrolyte energy storage device. The average thickness of the positive electrode may be, for example, 30 µm or more and 1,000 µm or less. The lower limit of the average thickness of the positive electrode may be 50 µm, 100 µm, or 200 µm. The upper limit of the average thickness of the positive electrode may be 500 µm, 400 µm, 300 µm, 200 µm, or 100 µm. The average thickness of the positive electrode is an average thickness of a part where the positive electrode active material layer is laminated directly on the positive electrode substrate or laminated thereon via an intermediate layer, and when both a part where the positive electrode active material layer is laminated on both sides of the positive electrode substrate and a part where the positive electrode active material layer is laminated on only one side of the positive electrode substrate are present, the average thickness is the average thickness of the part where the positive electrode active material layer is laminated on both sides of the positive electrode substrate. In the present specification, "average thickness" means an average value of thicknesses measured at five arbitrary points.

The positive electrode substrate has conductivity. In the present specification, "having conductivity" means that the volume resistivity is 10⁻² Ω·cm or less. The volume resistivity is a value measured in accordance with JIS-H-0505 (1975). On the other hand, in the present specification, "having no conductivity" or "having (electrical) insulating properties" means that the above volume resistivity is 10⁷ Ω·cm or more.

Examples of the material for the positive electrode substrate include metals such as aluminum, titanium, iron, and alloys thereof (such as stainless steel). Among these, aluminum or an aluminum alloy is preferable from the viewpoints of resistance to electric potential, high electronic conductivity, and cost.

The positive electrode substrate has, for example, a shape such as a sheet, a plate, or a strip. Examples of the form of the positive electrode substrate include a foil, a vapor-deposited film, a mesh, and a porous material, and a foil is preferable. The positive electrode substrate may be, for example, an aluminum foil or an aluminum alloy foil.

The average thickness of the positive electrode substrate may be, for example, 3 µm or more and 50 µm or less. The lower limit of the average thickness of the positive electrode substrate may be 5 µm, 8 µm, 10 µm, or 15 µm. The upper limit of the average thickness of the positive electrode substrate may be 40 µm, 30 µm, 20 µm, or 15 µm.

The intermediate layer is a layer arranged between the positive electrode substrate and the positive electrode active material layer. The intermediate layer contains, for example, a conductive agent and a binder. When the intermediate layer contains a conductive agent, the contact resistance between the positive electrode substrate and the positive electrode active material layer can be reduced. Examples of the conductive agent and the binder used for the intermediate layer include the same materials as those used for the positive electrode active material layer described later.

The positive electrode active material layer contains a sulfur-based active material. The positive electrode active material layer contains optional components such as a conductive agent, a binder, a dispersant, a thickener, and a filler, as necessary. The positive electrode active material layer may be formed from a positive electrode mixture containing a positive electrode active material and other optional components. The positive electrode active material layer may be provided on only one side or on both sides of a positive electrode substrate having, for example, a shape such as a sheet.

The sulfur-based active material is a component that functions as a positive electrode active material. The sulfur-based active material may be elemental sulfur, a sulfur compound, or a mixture thereof. Examples of the sulfur compound include metal sulfides such as lithium sulfide, and organic sulfur compounds such as organic disulfide compounds and carbon sulfide compounds. The sulfur-based active material has advantages such as a large theoretical capacity and low cost.

The content of the sulfur-based active material in the positive electrode active material layer is preferably 50% by mass or more and 90% by mass or less, more preferably 55% by mass or more and 80% by mass or less, and further preferably 60% by mass or more and 70% by mass or less. By setting the content of the sulfur-based active material within the above range, the discharge capacity of the non-aqueous electrolyte energy storage device can be further increased, among other things.

It is preferable that the positive electrode active material layer further contains porous carbon forming a composite with the sulfur-based active material. In other words, the sulfur-based active material is preferably contained in the positive electrode active material layer as a composite with porous carbon. Hereinafter, the composite of the sulfur-based active material and the porous carbon is also simply referred to as a "composite". In the composite, the sulfur-based active material is usually supported in the pores of the porous carbon. When the composite is in such a form, sufficient electronic conductivity is ensured. The composite may consist essentially of only the sulfur-based active material and the porous carbon, or may consist of only the sulfur-based active material and the porous carbon. The statement that the composite consists essentially of only the sulfur-based active material and the porous carbon means, for example, that the total content of the sulfur-based active material (total of elemental sulfur and sulfur compounds) and the porous carbon in the composite is 90% by mass or more, and may be 95% by mass or more, 98% by mass or more, or 99% by mass or more.

The content of the sulfur-based active material in the composite is preferably 50% by mass or more and 90% by mass or less, and more preferably 60% by mass or more and 80% by mass or less. By setting the content of the sulfur-based active material in the composite within the above range, the discharge capacity of the non-aqueous electrolyte energy storage device can be further increased, among other things.

The porous carbon has conductivity. Porous carbon is generally a porous inorganic material having carbon as a main constituent element. The main constituent element refers to an element having the largest content on a mass basis. The lower limit of the content of the carbon element in the porous carbon is preferably 70% by mass, and more preferably 80% by mass, 90% by mass, 95% by mass, or 97% by mass. The upper limit of the content of the carbon element in the porous carbon may be 100% by mass, or may be 99.9% by mass. The porous carbon may contain elements other than the carbon element, such as an oxygen element and a nitrogen element.

The composite can be manufactured by a conventionally known method. For example, it can be obtained by heating a mixture of a sulfur-based active material and porous carbon to the melting point of the sulfur-based active material or higher, and then cooling the mixture.

The content of the composite in the positive electrode active material layer is preferably 60% by mass or more and 97% by mass or less, more preferably 80% by mass or more and 96% by mass or less, and further preferably 90% by mass or more and 95% by mass or less. By setting the content of the composite within the above range, the discharge capacity of the non-aqueous electrolyte energy storage device can be further increased, among other things.

The positive electrode active material layer may contain other positive electrode active materials other than the sulfur-based active material. However, the content of the sulfur-based active material in all the positive electrode active materials is preferably 50% by mass or more, more preferably 70% by mass or more, further preferably 90% by mass or more, still more preferably 99% by mass or more, and particularly preferably 100% by mass.

The conductive agent is usually a component made of a material having conductivity. Note that the conductive agent does not include the porous carbon constituting the composite. Even when the volume resistivity of the conductive agent cannot be directly measured, a component made of a material known to have a volume resistivity of 10⁻² Ω·cm or less is regarded as a conductive agent. Examples of the conductive agent include carbon materials, metals, and conductive ceramics. The carbon material refers to a material having a carbon element as a main constituent element. The main constituent element refers to an element having the largest content on a mass basis. For example, the content ratio of the carbon element in the carbon material may be 80% by mass or more, 90% by mass or more, or may be 95% by mass, 99% by mass, or 99.9% by mass or more. The carbon material is preferably a carbon material other than a polymer compound that has not been carbonized. Examples of the carbon material include graphite, non-graphitic carbon, and graphene-based carbon. Examples of non-graphitic carbon include carbon nanofibers, pitch-based carbon fibers, and carbon black. Examples of carbon black include furnace black, acetylene black, and Ketjen black. Examples of graphene-based carbon include graphene, carbon nanotubes (CNT), and fullerenes. Examples of the shape of the conductive agent include a powder form and a fibrous form. As the conductive agent, one type or two or more types can be used. As the conductive agent, these materials may be used in composite form. For example, a material in which carbon black and CNT are combined may be used. As the conductive agent, carbon black or CNT is preferable, and as the carbon black, acetylene black is more preferable. It is also preferable to use carbon black (preferably acetylene black) and CNT in combination.

The content of the conductive agent (excluding the porous carbon in the composite) in the positive electrode active material layer is preferably 0.1% by mass or more and 10% by mass or less, and more preferably 1% by mass or more and 9% by mass or less. The upper limit of the content of the conductive agent may be 8% by mass, 5% by mass, 4% by mass, 3% by mass, or 2% by mass. By setting the content of the conductive agent within the above range, the energy density of the non-aqueous electrolyte energy storage device can be increased, among other things.

Examples of the binder include water-based binders and organic solvent-based binders.

A water-based binder is a binder that dissolves or disperses in water. The water-based binder may be a binder that dissolves or disperses in 100 parts by mass of water at 20 °C in an amount of 1 part by mass or more. When the positive electrode active material layer is formed using a positive electrode mixture paste in which the dispersion medium is water or a mixed solvent mainly composed of water, a water-based binder (a water-soluble or water-dispersible polymer material) can be used. Examples of the water-based binder include polyethylene oxide, polypropylene oxide, polyvinyl alcohol, polyacrylic acid, polymethacrylic acid, polytetrafluoroethylene, styrene-butadiene rubber, polyethylene, polypropylene, nitrile-butadiene rubber, and cellulose.

An organic solvent-based binder is a binder that is dissolved or dispersed in an organic solvent (for example, N-methylpyrrolidone). The organic solvent-based binder may be a binder that dissolves or disperses in 100 parts by mass of an organic solvent (for example, N-methylpyrrolidone) at 20 °C in an amount of 1 part by mass or more. When the positive electrode active material layer is formed using a positive electrode mixture paste in which the dispersion medium is an organic solvent or a mixed solvent mainly composed of an organic solvent, an organic solvent-based binder (a polymer material having solubility or dispersibility in an organic solvent) can be used. Examples of the organic solvent-based binder include polyvinylidene fluoride, a copolymer of vinylidene fluoride and hexafluoropropylene, a copolymer of ethylene and vinyl alcohol, polyacrylonitrile, polyphosphazene, polysiloxane, polyvinyl acetate, polymethyl methacrylate, polystyrene, polycarbonate, polyamide, polyimide, polyamide-imide, a crosslinked polymer of cellulose and chitosan pyrrolidone carboxylate, and a derivative of chitosan.

The binder may be a fluororesin (polytetrafluoroethylene, polyvinylidene fluoride, etc.), a polyolefin (polyethylene, polypropylene, etc.), an elastomer (ethylene-propylene-diene rubber, styrene-butadiene rubber, fluororubber, etc.), a polysaccharide polymer (cellulose, a derivative of chitosan, etc.), or the like. As the binder, one type or two or more types can be used.

The content of the binder in the positive electrode active material layer is preferably 0.1% by mass or more and 10% by mass or less, more preferably 1% by mass or more and 9% by mass or less, and further preferably 2% by mass or more and 8% by mass or less. The upper limit of the content of the binder may be 5% by mass, 4% by mass, or 3% by mass. By setting the content of the binder within the above range, the sulfur-based active material and the like can be stably retained, among other things. The technique disclosed herein can also be implemented in an embodiment in which the positive electrode active material layer does not contain a binder.

Examples of the dispersant include polysaccharide polymers such as carboxymethyl cellulose (CMC) and methyl cellulose. When the dispersant has a functional group that reacts with lithium or the like, the functional group may be deactivated in advance by methylation or the like. The content of the dispersant in the positive electrode active material layer is preferably 0.05% by mass or more and 5% by mass or less, and more preferably 0.1% by mass or more and 2% by mass or less. The polysaccharide polymer may function as a thickener or may function as a binder.

Examples of the thickener include polyacrylic acid (PAA) and the like. The content of the thickener in the positive electrode active material layer is preferably 0.05% by mass or more and 5% by mass or less, and more preferably 0.1% by mass or more and 4% by mass or less. Polyacrylic acid may function as a binder.

The filler is not particularly limited. The filler is a component other than the positive electrode active material (sulfur-based active material and other positive electrode active materials), the conductive agent, the binder, the dispersant, and the thickener, and may be a component intentionally contained. The filler may be contained as a component for filling gaps in the positive electrode active material layer, or may be contained for other purposes. The filler may be an organic substance such as polyolefin, or may be an inorganic substance such as an inorganic oxide, a hydroxide, or a carbonate. As the filler, one type or two or more types can be used. When the positive electrode active material layer contains a filler, the content of the filler in the positive electrode active material layer can be 0.1% by mass or more and 8% by mass or less, and is usually preferably 5% by mass or less, more preferably 2% by mass or less. The technique disclosed herein can also be implemented in an embodiment in which the positive electrode active material layer does not contain a filler.

The positive electrode active material layer may further contain other components other than the positive electrode active material (sulfur-based active material and other positive electrode active materials), the conductive agent, the binder, the dispersant, the thickener, and the filler. The other components include those generated unintentionally in the positive electrode active material layer. Further, the positive electrode active material layer may contain, as the other components, impurities unintentionally contained therein, as long as the effects of the present invention are achieved. The upper limit of the content of the other components in the positive electrode active material layer may be 10% by mass, or may be 5% by mass, 2% by mass, 1% by mass, 0.1% by mass, or 0.01% by mass. The upper limit of the content of the components unintentionally generated in the positive electrode active material layer may be 10% by mass, or may be 5% by mass, 2% by mass, 1% by mass, 0.1% by mass, or 0.01% by mass. The upper limit of the content of the unintentionally contained impurities in the positive electrode active material layer may be 10% by mass, or may be 5% by mass, 2% by mass, 1% by mass, 0.1% by mass, or 0.01% by mass.

The lower limit of the mass per unit area of the positive electrode active material layer may be, for example, 1 mg/cm² or 3 mg/cm², but is preferably 5 mg/cm², more preferably 7 mg/cm², further preferably 9 mg/cm², and still more preferably 10 mg/cm². By setting the mass per unit area of the positive electrode active material layer at or above the above lower limit, the energy density of the non-aqueous electrolyte energy storage device can be increased, among other things. The upper limit of the mass per unit area of the positive electrode active material layer may be 30 mg/cm², or may be 20 mg/cm², 15 mg/cm², 10 mg/cm², 7 mg/cm², or 5 mg/cm². By setting the mass per unit area of the positive electrode active material layer at or below the above upper limit, the discharge capacity of the non-aqueous electrolyte energy storage device can be further increased, among other things.

### (Method for Manufacturing Positive Electrode)

The positive electrode can be manufactured by a known method. The manufacture of the positive electrode can be performed, for example, by applying a paste-like positive electrode mixture (positive electrode mixture paste) directly to the positive electrode substrate or via an intermediate layer and drying it to form a positive electrode active material layer. The positive electrode mixture paste usually contains a sulfur-based active material, other optional components, and a dispersion medium. After drying, pressing or the like may be performed on the positive electrode active material layer.

### (Negative Electrode)

The negative electrode has a negative electrode substrate and a negative electrode active material layer laminated directly on the negative electrode substrate or laminated thereon via an intermediate layer. Usually, the negative electrode has a part where the negative electrode substrate is exposed. The part where the negative electrode substrate is exposed is usually connected to the negative electrode lead described above. The negative electrode may have a shape such as, for example, a sheet, a plate, or a strip.

The thickness of the negative electrode is appropriately set according to the application and the like of the non-aqueous electrolyte energy storage device. The average thickness of the negative electrode may be, for example, 30 µm or more and 1,000 µm or less. The lower limit of the average thickness of the negative electrode may be 50 µm, 100 µm, or 200 µm. The upper limit of the average thickness of the negative electrode may be 500 µm, 400 µm, 300 µm, 200 µm, or 100 µm. The average thickness of the negative electrode is an average thickness of a part where the negative electrode active material layer is laminated directly on the negative electrode substrate or laminated thereon via an intermediate layer, and when both a part where the negative electrode active material layer is laminated on both sides of the negative electrode substrate and a part where the negative electrode active material layer is laminated on only one side of the negative electrode substrate are present, the average thickness is an average thickness of the part where the negative electrode active material layer is laminated on both sides of the negative electrode substrate.

The negative electrode substrate has conductivity. Examples of the material for the negative electrode substrate include metals such as copper, nickel, iron, and alloys thereof (such as stainless steel), and carbon materials. Among these, nickel or a nickel alloy is preferable.

The negative electrode substrate has a shape such as, for example, a sheet, a plate, or a strip. Examples of the form of the negative electrode substrate include a foil, a vapor-deposited film, a mesh, and a porous material, and a foil is preferable. The negative electrode substrate may be, for example, a nickel foil or a nickel alloy foil.

The average thickness of the negative electrode substrate may be, for example, 2 µm or more and 35 µm or less. The lower limit of the average thickness of the negative electrode substrate may be 3 µm, 4 µm, 5 µm, or 10 µm. The upper limit of the average thickness of the negative electrode substrate may be 30 µm, 20 µm, 15 µm, or 10 µm.

The configuration of the intermediate layer of the negative electrode is not particularly limited, and it can be selected, for example, from the configurations exemplified for the intermediate layer of the positive electrode.

The negative electrode active material layer contains a negative electrode active material. The negative electrode active material layer contains optional components such as a conductive agent, a binder, a dispersant, a thickener, and a filler, as necessary. Optional components such as a conductive agent, a binder, a dispersant, a thickener, and a filler can be selected from the materials exemplified for the positive electrode described above. The negative electrode active material layer may be formed from a negative electrode mixture containing a negative electrode active material and other optional components. The negative electrode active material layer may be provided on only one side or on both sides of a negative electrode substrate having a shape such as a sheet, for example.

As the negative electrode active material, a known negative electrode active material can be used. As a negative electrode active material for a lithium-ion secondary battery, a material capable of occluding and releasing lithium ions is usually used. Examples of the negative electrode active material include metallic lithium; metals or metalloids such as silicon and tin; metal oxides or metalloid oxides such as silicon oxide, titanium oxide, and tin oxide; titanium-containing oxides such as Li₄Ti₅O₁₂, LiTiO₂, and TiNb₂O₇; polyphosphate compounds; silicon carbide; and carbon materials such as graphite and non-graphitic carbon. Among these materials, a carbon material is preferable, and graphite or non-graphitic carbon may be more preferable in some cases. Graphite may have its surface coated with another material such as non-graphitic carbon. As the negative electrode active material, one type or two or more types can be used. In the case of a negative electrode active material not containing charge transport ions such as lithium ions, one doped with charge transport ions such as lithium ions can be used.

As the negative electrode active material, metallic lithium is preferable. In other words, it is preferable that the negative electrode or the negative electrode active material layer contains metallic lithium at least in the charged state. It is more preferable that the negative electrode or the negative electrode active material layer contains metallic lithium in all states including the charged state and the discharged state.

The metallic lithium may be pure metallic lithium consisting essentially only of the lithium element, or may be a lithium alloy containing other metal elements. Examples of the lithium alloy include a lithium-silver alloy, a lithium-zinc alloy, a lithium-calcium alloy, a lithium-aluminum alloy, a lithium-magnesium alloy, and a lithium-indium alloy. The lithium alloy may contain a plurality of metal elements other than the lithium element.

The negative electrode active material layer is preferably a layer consisting essentially only of metallic lithium (pure metallic lithium or a lithium alloy). The lower limit of the content of the lithium element in the negative electrode active material layer is preferably 80% by mass, more preferably 90% by mass, and further preferably 99% by mass. The upper limit of the content of the lithium element in the negative electrode active material layer may be 100% by mass.

When the negative electrode active material layer contains a conductive agent, the content of the conductive agent in the negative electrode active material layer is preferably 1% by mass or more and 10% by mass or less, and more preferably 3% by mass or more and 9% by mass or less. The content of the conductive agent in the negative electrode active material layer may be 5% by mass or less, or may be 2% by mass or less. The technique disclosed herein can also be implemented in an embodiment in which the negative electrode active material layer does not contain a conductive agent.

When the negative electrode active material layer contains a binder, the content of the binder in the negative electrode active material layer is preferably 0.1% by mass or more and 10% by mass or less, and more preferably 0.5% by mass or more and 8% by mass or less. The content of the binder in the negative electrode active material layer may be 5% by mass or less, or may be 2% by mass or less. The technique disclosed herein can also be implemented in an embodiment in which the negative electrode active material layer does not contain a binder.

When the negative electrode active material layer contains a dispersant, the content of the dispersant in the negative electrode active material layer is preferably 0.05% by mass or more and 5% by mass or less, and more preferably 0.1% by mass or more and 2% by mass or less. The content of the dispersant in the negative electrode active material layer may be 1% by mass or less, or may be 0.1% by mass or less. The technique disclosed herein can also be implemented in an embodiment in which the negative electrode active material layer does not contain a dispersant.

When the negative electrode active material layer includes a thickener, the content of the thickener in the negative electrode active material layer is preferably 0.1% by mass or more and 10% by mass or less, and more preferably 0.5% by mass or more and 8% by mass or less. The content of the thickener in the negative electrode active material layer may be 5% by mass or less, or may be 2% by mass or less. The technique disclosed herein can also be implemented in an embodiment in which the negative electrode active material layer does not include a thickener.

The filler in the negative electrode active material layer is a component other than the negative electrode active material, the conductive agent, the binder, the dispersant, and the thickener, and may be a component intentionally contained. The filler may be contained as a component for filling gaps in the negative electrode active material layer, or may be contained for other purposes. When the negative electrode active material layer includes a filler, the content of the filler in the negative electrode active material layer can be 0.1% by mass or more and 8% by mass or less, and usually, 5% by mass or less is preferable, and 2% by mass or less is more preferable. The technique disclosed herein can also be implemented in an embodiment in which the negative electrode active material layer does not contain a filler.

The negative electrode active material layer may further contain other components other than the negative electrode active material, the conductive agent, the binder, the dispersant, the thickener, and the filler. The other components include those generated unintentionally in the negative electrode active material layer. Further, the negative electrode active material layer may contain unintentionally contained impurities as the other components as long as the effect of the present invention is exerted. The upper limit of the content of the other components in the negative electrode active material layer may be 10% by mass, or may be 5% by mass, 2% by mass, 1% by mass, 0.1% by mass, or 0.01% by mass. The upper limit of the content of the components unintentionally generated in the negative electrode active material layer may be 10% by mass, or may be 5% by mass, 2% by mass, 1% by mass, 0.1% by mass, or 0.01% by mass. The upper limit of the content of the unintentionally contained impurities in the negative electrode active material layer may be 10% by mass, or may be 5% by mass, 2% by mass, 1% by mass, 0.1% by mass, or 0.01% by mass.

The negative electrode active material layer may be a non-porous layer (a solid layer) or a porous layer, but is preferably a non-porous layer. The negative electrode active material layer may be a layer of metallic lithium. The negative electrode active material layer may be a layer consisting of a metallic lithium foil (a pure metallic lithium foil or a lithium alloy foil). The average thickness of the negative electrode active material layer in the charged state may be, for example, 5 µm or more and 2,000 µm or less. The lower limit of the average thickness of one negative electrode active material layer in the charged state may be 10 µm, 20 µm, 30 µm, 50 µm, 100 µm, 200 µm, 300 µm, 400 µm, or 600 µm. The upper limit of the average thickness of one negative electrode active material layer in the charged state may be 1,500 µm, 1,200 µm, 800 µm, or 600 µm.

### (Method for Manufacturing Negative Electrode)

The negative electrode can be manufactured by a known method. As in the above-described method for manufacturing the positive electrode, the negative electrode can be manufactured by, for example, applying a paste-like negative electrode mixture (negative electrode mixture paste) directly to a negative electrode substrate or via an intermediate layer, and drying the paste to form a negative electrode active material layer. After drying, pressing or the like may be performed on the negative electrode active material layer. When the negative electrode active material is a metal such as metallic lithium, the negative electrode can also be manufactured by laminating a metal foil directly on a negative electrode substrate or via an intermediate layer, followed by pressing or the like.

### (Separator)

A known separator can be used as the separator. As the separator, for example, a separator consisting only of a substrate layer, a separator in which an inorganic layer containing inorganic particles and a binder is formed on one or both surfaces of a substrate layer, or the like, can be used.

Examples of the form of the substrate layer of the separator include a woven fabric, a non-woven fabric, and a porous resin film. Among these forms, a porous resin film is preferable from the viewpoint of strength and the like, and a non-woven fabric is preferable from the viewpoint of liquid retention properties of the non-aqueous electrolyte and the like. The material for the substrate layer of the separator is not particularly limited as long as it has insulating properties, but resins such as polyolefin (polyethylene, polypropylene, etc.), polyimide, and aramid are preferable.

Examples of inorganic compounds constituting the inorganic particles include oxides such as iron oxide, silicon oxide, aluminum oxide, titanium oxide, zirconium oxide, calcium oxide, and magnesium oxide; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon; and substances derived from mineral resources such as talc, zeolite, kaolin, bentonite, and mica, or artificial products thereof. As the inorganic particles, one type or two or more types can be used. The average particle size of the inorganic particles is preferably, for example, 0.5 µm or more and 10 µm or less. The content of the inorganic particles in the inorganic layer is preferably 50% by mass or more and 99% by mass or less, and more preferably 80% by mass or more and 98% by mass or less.

Examples of the binder used for the inorganic layer include the same binders as those exemplified for the positive electrode active material layer.

The porosity of the separator may be, for example, 20% or more and 80% or less. The lower limit of the porosity of the separator may be 30%, 40%, or 50% from the viewpoint of discharge performance and the like. The upper limit of the porosity of the separator may be 70%, 60%, or 50% from the viewpoint of strength and the like. In the present specification, "porosity" is a volume-based value, and means a value measured by a mercury porosimeter.

The average thickness of the separator may be, for example, 10 µm or more and 40 µm or less, or may be 15 µm or more and 30 µm or less.

As the separator, a polymer gel composed of a polymer and a non-aqueous electrolyte may be used. As the separator, the above-mentioned porous resin film, non-woven fabric, or the like and a polymer gel may be used in combination.

### (Electrode Body)

As the electrode body, those having a known structure such as a wound-type electrode body and a stacked-type electrode body can be adopted.

The wound-type electrode body has a structure in which a positive electrode and a negative electrode are wound in an insulated state. The wound-type electrode body may be cylindrical (columnar) or flat. The electrode body 2 provided in the non-aqueous electrolyte energy storage device 1 of Fig. 1 is a flat wound-type electrode body. The wound-type electrode body can be produced, for example, by the following procedure. First, a positive electrode, a separator, and a negative electrode each formed in a strip shape are overlapped to obtain a stacked body. By winding this stacked body, a wound-type electrode body is obtained.

The stacked-type electrode body has a structure in which one or a plurality of positive electrodes and one or a plurality of negative electrodes are stacked in an insulated state. For example, a stacked-type electrode body can be obtained by stacking a positive electrode, a separator, and a negative electrode each formed in a rectangular shape.

In addition, as the electrode body, for example, one having a structure in which at least one of a positive electrode or a negative electrode is folded in a bellows shape and stacked can also be adopted.

### (Non-Aqueous Electrolyte)

The non-aqueous electrolyte is a medium that serves as a medium for transport of charge transport ions (for example, lithium ions) between a positive electrode and a negative electrode, and refers to one that does not substantially contain water. The water content in the non-aqueous electrolyte may be, for example, 10,000 ppm or less, 5,000 ppm or less, 1,000 ppm or less, 500 ppm or less, or 100 ppm or less, and is preferably 50 ppm or less, and more preferably 20 ppm or less. The non-aqueous electrolyte contains an electrolyte salt, an ionic liquid, and a non-aqueous solvent. The non-aqueous solvent may be a non-ionic compound. The non-aqueous electrolyte may be a non-aqueous electrolyte solution. In one embodiment of the present invention, the non-aqueous electrolyte energy storage device may be a non-aqueous electrolyte solution energy storage device.

The electrolyte salt refers to an ionic compound in which the cation is a charge transport ion and which is in a solid state at normal temperature (20 °C) at 1 atm. A known electrolyte salt can be used as the electrolyte salt. Examples of the electrolyte salt include a lithium salt, a sodium salt, a potassium salt, a magnesium salt, and an onium salt. Among these, a lithium salt is preferable. As the electrolyte salt, one type or two or more types can be used.

Examples of anions constituting the electrolyte salt include imide anions such as N(CF₃SO₂)₂⁻(bis(trifluoromethanesulfonyl)imide anion: TFSI⁻), N(SO₂F)₂⁻(bis(fluorosulfonyl)imide anion: FSI⁻), N(C₂F₅SO₂)₂⁻(bis(pentafluoroethanesulfonyl)imide anion), N(C₄F₉SO₂)₂⁻(bis(nonafluorobutanesulfonyl)imide anion), N(POF₂)₂⁻(bis(difluorophosphonyl)imide anion), N(CF₃SO₂)(CF₃CO)⁻((trifluoromethanesulfonyl)(trifluoromethanecarbonyl)imide anion), N(CN)₂⁻(dicyanoimide anion), CF₃-SO₂-N-SO₂-N-SO₂CF₃⁻, FSO₂-N-SO₂-C₄F₉⁻, CF₃-SO₂-N-SO₂-C₄F₉⁻, CF₃-SO₂-N-SO₂-CF₂-SO₂-N-SO₂-CF₃²⁻, CF₃-SO₂-N-SO₂-CF₂-SO₃²⁻, and CF₃-SO₂-N-SO₂-CF₂-SO₂-C(-SO₂CF₃)₂²⁻. As anions constituting the electrolyte salt, anions other than imide anions, such as PF₆⁻, PO₂F₂⁻, BF₄⁻, ClO₄⁻, NO₂⁻, NO₃⁻, I⁻, SO₃CF₃⁻, C(SO₂CF₃)₃⁻, and C(SO₂C₂F₅)₃⁻, can also be used.

As the anion constituting the electrolyte salt, an imide anion is preferable; at least one selected from the group consisting of a bis(trifluoromethanesulfonyl)imide anion (TFSI⁻) and a bis(fluorosulfonyl)imide anion (FSI⁻) is more preferable; and a bis(fluorosulfonyl)imide anion (FSI⁻) is further preferable. That is, as the electrolyte salt, an imide salt is preferable; at least one selected from the group consisting of lithium bis(trifluoromethanesulfonyl)imide (LiTFSI) and lithium bis(fluorosulfonyl)imide (LiFSI) is more preferable; and lithium bis(fluorosulfonyl)imide (LiFSI) is further preferable. Further, the anion constituting the electrolyte salt preferably has a fluorine atom. When the anion constituting the electrolyte salt is such an anion, the ionic conductivity of the non-aqueous electrolyte increases, the discharge capacity of the non-aqueous electrolyte energy storage device can be further increased, among other things. As the electrolyte salt, one type or two or more types can be used.

The molality of the electrolyte salt in the non-aqueous electrolyte may be, for example, 0.3 mol/kg or more and 3.5 mol/kg or less. The lower limit of the molality of the electrolyte salt is preferably 0.5 mol/kg, more preferably 0.8 mol/kg, and may be 1.1 mol/kg, 1.3 mol/kg, 1.5 mol/kg, 1.8 mol/kg, or 2.0 mol/kg. The upper limit of the molality of the electrolyte salt is preferably 3.0 mol/kg, and may be 2.8 mol/kg, 2.5 mol/kg, 2.2 mol/kg, 2.0 mol/kg, or 1.5 mol/kg. By setting the molality of the electrolyte salt within the above range, the ionic conductivity and the like of the non-aqueous electrolyte are optimized, and the discharge capacity of the non-aqueous electrolyte energy storage device can be further increased, among other things. In the present specification, the molality refers to the amount of substance (mol) of the electrolyte salt based on the total mass (kg) of the ionic liquid and the non-aqueous solvent.

The ionic liquid refers to an ionic compound, at least a part of which is in a liquid state at normal temperature (20 °C) at 1 atm.

Examples of the cation constituting the ionic liquid include a quaternary ammonium cation, an imidazolium-based cation, a pyrrolidinium-based cation, a piperidinium-based cation, a pyridinium-based cation, a pyrrolium-based cation, a pyrazolium-based cation, a pyrrolinium-based cation, a quaternary phosphonium cation, and a sulfonium cation.

Examples of the quaternary ammonium-based cation include tetraalkylammonium-based cations such as a trimethylethylammonium cation, a trimethylpropylammonium cation, a trimethylbutylammonium cation, a trimethylhexylammonium cation, and a tetrapentylammonium cation.

Examples of the imidazolium-based cation include a 1,3-dimethylimidazolium cation, a 1-ethyl-3-methylimidazolium cation, a 1,3-diethylimidazolium cation, a 1-butyl-3-methylimidazolium cation, a 1,2,3-trimethylimidazolium cation, a 1,2-dimethyl-3-ethylimidazolium cation, a 1,2-dimethyl-3-propylimidazolium cation, and a 1-butyl-2,3-dimethylimidazolium cation.

Examples of the pyrrolidinium-based cation include a 1,1-dimethylpyrrolidinium cation, a 1-ethyl-1-methylpyrrolidinium cation, a 1-methyl-1-propylpyrrolidinium cation, and a 1-butyl-1-methylpyrrolidinium cation.

Examples of the piperidinium-based cation include a 1,1-dimethylpiperidinium cation, a 1-ethyl-1-methylpiperidinium cation, a 1-methyl-1-propylpiperidinium cation, and a 1-butyl-1-methylpiperidinium cation.

Examples of the pyridinium-based cation include a 1-methylpyridinium cation, a 1-ethylpyridinium cation, a 1-propylpyridinium cation, a 1-butylpyridinium cation, a 1-ethyl-2-methylpyridinium cation, a 1-butyl-4-methylpyridinium cation, and a 1-butyl-2,4-dimethylpyridinium cation.

Examples of the pyrrolium-based cation include a 1,1-dimethylpyrrolium cation, a 1-ethyl-1-methylpyrrolium cation, a 1-methyl-1-propylpyrrolium cation, and a 1-butyl-1-methylpyrrolium cation.

Examples of the pyrazolium-based cation include a 1,2-dimethylpyrazolium cation, a 1-ethyl-2-methylpyrazolium cation, a 1-propyl-2-methylpyrazolium cation, and a 1-butyl-2-methylpyrazolium cation.

Examples of the pyrrolinium-based cation include a 1,2-dimethylpyrrolinium cation, a 1-ethyl-2-methylpyrrolinium cation, a 1-propyl-2-methylpyrrolinium cation, and a 1-butyl-2-methylpyrrolinium cation.

Examples of the quaternary phosphonium cation include a tetramethylphosphonium cation, a tetraethylphosphonium cation, a trimethylethylphosphonium cation, a trimethylpropylphosphonium cation, a trimethylbutylphosphonium cation, a tetraphenylphosphonium cation, and a trimethylmethoxymethylphosphonium cation.

Examples of the sulfonium cation include a trimethylsulfonium cation, a triethylsulfonium cation, and a tributylsulfonium cation.

As the cation constituting the ionic liquid, at least one selected from the group consisting of a quaternary ammonium cation, an imidazolium-based cation, a pyrrolidinium-based cation, a piperidinium-based cation, a quaternary phosphonium cation, and a sulfonium cation is preferable, at least one selected from the group consisting of an imidazolium-based cation, a pyrrolidinium-based cation, and a piperidinium-based cation is more preferable, and a pyrrolidinium-based cation is further preferable. When the cation constituting the ionic liquid is such a cation, the discharge capacity of the non-aqueous electrolyte energy storage device can be further increased, among other things. One type or two or more types of these cations may be included.

Examples of the anion constituting the ionic liquid include the same as those exemplified as the anion constituting the electrolyte salt. As the anion constituting the ionic liquid, an imide anion is preferable, at least one selected from the group consisting of a bis(trifluoromethanesulfonyl)imide anion (TFSI⁻) and a bis(fluorosulfonyl)imide anion (FSI⁻) is more preferable, and a bis(fluorosulfonyl)imide anion (FSI⁻) is further preferable. Further, the anion constituting the ionic liquid preferably has a fluorine atom. When the anion constituting the ionic liquid is such an anion, the discharge capacity of the non-aqueous electrolyte energy storage device can be further increased, among other things. One type or two or more types of these anions may be included.

It is preferable that at least one of the electrolyte salt or the ionic liquid has a bis(fluorosulfonyl)imide anion (FSI⁻) as an anion. Further, it is preferable that a bis(fluorosulfonyl)imide anion (FSI⁻) is included as an anion in the non-aqueous electrolyte. In such a case, the discharge capacity of the non-aqueous electrolyte energy storage device can be further increased, among other things.

Further, the anion present in the non-aqueous electrolyte is preferably substantially only an imide anion, and more preferably substantially only at least one anion selected from the group consisting of a bis(trifluoromethanesulfonyl)imide anion (TFSI⁻) and a bis(fluorosulfonyl)imide anion (FSI⁻). For example, the content ratio of these anions with respect to all anions in the non-aqueous electrolyte is preferably 90 mol% or more, more preferably 99 mol% or more, and further preferably 99.9 mol% or more. By having such a configuration of anions in the non-aqueous electrolyte, the ionic conductivity of the non-aqueous electrolyte increases, and the discharge capacity of the non-aqueous electrolyte energy storage device can be further increased, among other things.

The lower limit of the content of the ionic liquid with respect to the total of the ionic liquid and the non-aqueous solvent is preferably 5% by volume, more preferably 7% by volume, and may be 10% by volume, 20% by volume, or 30% by volume. The upper limit of the above content is preferably 90% by volume, more preferably 80% by volume, further preferably 70% by volume, and may be 60% by volume, 50% by volume, 40% by volume, 30% by volume, 20% by volume, or 10% by volume. By setting the content of the ionic liquid within the above range, the discharge capacity of the non-aqueous electrolyte energy storage device can be further increased, among other things.

The non-aqueous solvent contains a fluorinated cyclic ether. The fluorinated cyclic ether refers to an ether having a fluorine element and a cyclic structure. The fluorinated cyclic ether may be composed of only a carbon element, a hydrogen element, an oxygen element, and a fluorine element. It is preferable that the oxygen element possessed by the fluorinated cyclic ether is only an oxygen element constituting an ether bond. That is, it is preferable that the fluorinated cyclic ether does not have an oxygen element-containing substituent such as a hydroxy group or a carboxy group. The fluorinated cyclic ether may be any of a monoether (a compound having only one ether bond), a diether (a compound having two ether bonds), a triether (a compound having three ether bonds), and the like, but is preferably a monoether. The fluorinated cyclic ether preferably has an ether bond in the cyclic structure. The fluorinated cyclic ether is preferably a saturated ether. Saturated ether refers to an ether having no unsaturated bond between carbon atoms (carbon-carbon double bond and carbon-carbon triple bond).

The lower limit of the number of ring members in the ring structure possessed by the fluorinated cyclic ether is preferably 3, more preferably 4, and further preferably 5. The upper limit of the above number of ring members is preferably 8, more preferably 7, further preferably 6, and still more preferably 5. The lower limit of the number of carbon atoms in the fluorinated cyclic ether is preferably 2, more preferably 3, and further preferably 4. The upper limit of the above number of carbon atoms is preferably 7, more preferably 6, further preferably 5, and still more preferably 4. The lower limit of the number of fluorine atoms in the fluorinated cyclic ether is preferably 2, more preferably 3, and further preferably 4. The upper limit of the above number of fluorine atoms is preferably 10, more preferably 8, further preferably 6, and still more preferably 4.

The fluorinated cyclic ether is preferably represented by the following formula (1).

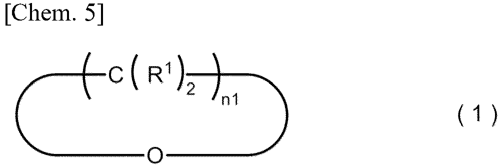

(In formula (1), each R¹ is independently a hydrogen atom, a fluorine atom, an alkyl group having 1 to 4 carbon atoms, or a fluorinated alkyl group having 1 to 4 carbon atoms. Provided that at least one of the plurality of R¹ is a fluorine atom or a fluorinated alkyl group having 1 to 4 carbon atoms. n1 is an integer of 2 to 5.)

When R¹ in formula (1) above is an alkyl group or a fluorinated alkyl group, the number of carbon atoms is preferably 3 or less, and more preferably 2 or less. R¹ in formula (1) above is preferably a hydrogen atom or a fluorine atom. n1 is preferably 4 or 5, and more preferably 4.

The fluorinated cyclic ether may be, for example, 3,3,4,4-tetrafluorotetrahydrofuran. As the fluorinated cyclic ether, one type or two or more types can be used.

The lower limit of the total content of the ionic liquid and the fluorinated cyclic ether with respect to the total of the ionic liquid and the non-aqueous solvent is preferably 10% by volume, more preferably 15% by volume, further preferably 20% by volume, and may be 25% by volume, 30% by volume, 35% by volume, 40% by volume, 45% by volume, 50% by volume, 55% by volume, 60% by volume, 65% by volume, 70% by volume, 75% by volume, 80% by volume, 85% by volume, 90% by volume, or 95% by volume. By setting the total content to be the above lower limit or more, the discharge capacity of the non-aqueous electrolyte energy storage device tends to become larger, and the capacity retention ratio after charge-discharge cycles also tends to increase. The upper limit of the above total content may be 100% by volume, and may be 98% by volume, 95% by volume, 90% by volume, 85% by volume, 80% by volume, 75% by volume, 70% by volume, 65% by volume, 60% by volume, 55% by volume, 50% by volume, 45% by volume, 40% by volume, 35% by volume, or 30% by volume.

The lower limit of the content of the fluorinated cyclic ether with respect to the total of the ionic liquid and the non-aqueous solvent is preferably 5% by volume, more preferably 10% by volume, further preferably 20% by volume, and still more preferably 30% by volume. By setting the above content at or above the above lower limit, it is possible to increase the discharge capacity of the non-aqueous electrolyte energy storage device and to increase the capacity retention ratio after charge-discharge cycles, among other things. The lower limit of the above content may be 40% by volume, 50% by volume, 60% by volume, or 70% by volume. The upper limit of the above content is preferably 90% by volume, more preferably 80% by volume, further preferably 70% by volume, and may be 60% by volume, 50% by volume, 40% by volume, or 30% by volume.

The non-aqueous solvent may contain another non-aqueous solvent other than the fluorinated cyclic ether. Examples of the other non-aqueous solvent include ethers other than the above fluorinated cyclic ether, cyclic carbonates, chain carbonates, ethers, carboxylic acid esters, phosphoric acid esters, amides, and nitriles.

The other non-aqueous solvent is preferably a solvent having a donor number of 14 to 30. The lower limit of the donor number is more preferably 15, further preferably 16, and may be 17, 18, 19, 20, 21, or 22. By using another non-aqueous solvent having a donor number at or above the above lower limit, the degree of dissociation of charge transport ions in the non-aqueous electrolyte increases, and the high-rate discharge performance of the non-aqueous electrolyte energy storage device can be further enhanced, among other things. Further, the donor number of the other non-aqueous solvent is preferably larger than the donor number of the fluorinated cyclic ether represented by formula (1) above. The upper limit of the donor number of the other non-aqueous solvent is more preferably 27, further preferably 25, and may be 24, 23, 22, 21, 20, 19, 18, or 17. By using another non-aqueous solvent having a donor number at or below the above upper limit, dissolution of polysulfides from the positive electrode into the non-aqueous electrolyte is particularly effectively suppressed, and it is possible to increase the discharge capacity of the non-aqueous electrolyte energy storage device and to increase the capacity retention ratio after charge-discharge cycles, among other things.

The other non-aqueous solvent is preferably a solvent having a viscosity of less than 1.0 mPa·s at 25 °C. By using another non-aqueous solvent having a viscosity of less than the above upper limit, the non-aqueous electrolyte can be made particularly sufficiently low in viscosity, and the high-rate discharge performance of the non-aqueous electrolyte energy storage device can be further enhanced, among other things. The above viscosity is more preferably 0.9 mPa·s or less, and further preferably 0.85 mPa·s or less. Further, the viscosity of the other non-aqueous solvent at 25 °C is preferably lower than the viscosity of the fluorinated cyclic ether represented by formula (1) above at 25 °C. The lower limit of the viscosity of the other non-aqueous solvent at 25 °C may be, for example, 0.1 mPa·s, and may be 0.3 mPa·s, 0.5 mPa·s, or 0.7 mPa·s.

The other non-aqueous solvent is preferably an ether other than the above fluorinated cyclic ether. As such an ether, at least one selected from the group consisting of fluorinated cyclic ethers other than the fluorinated cyclic ether represented by formula (1) above, non-fluorinated cyclic ethers, and chain ethers is more preferable. Among these, at least one selected from the group consisting of non-fluorinated cyclic ethers and chain ethers is further preferable. When the other non-aqueous solvent is such a solvent, the high-rate discharge performance of the non-aqueous electrolyte energy storage device can be further enhanced. Further, when the non-aqueous solvent further contains a chain ether as another non-aqueous solvent, the capacity retention ratio after charge-discharge cycles of the non-aqueous electrolyte energy storage device can be favorable even if the content of the chain ether is relatively large.

The non-fluorinated cyclic ether may be a cyclic ether composed only of the carbon element, the hydrogen element, and the oxygen element. It is preferable that the oxygen element possessed by the non-fluorinated cyclic ether is only an oxygen element constituting an ether bond. That is, it is preferable that the non-fluorinated cyclic ether does not have an oxygen element-containing substituent such as a hydroxy group or a carboxy group. The non-fluorinated cyclic ether may be any of a monoether, a diether, a triether, and the like, but is preferably a monoether. The non-fluorinated cyclic ether preferably has an ether bond in the cyclic structure. The non-fluorinated cyclic ether is preferably a saturated ether.

The lower limit of the number of ring members in the ring structure possessed by the non-fluorinated cyclic ether is preferably 3, more preferably 4, and further preferably 5. The upper limit of the above number of ring members is preferably 8, more preferably 7, and further preferably 6. The lower limit of the number of carbon atoms in the non-fluorinated cyclic ether is preferably 2, more preferably 3, and further preferably 4. The upper limit of the above number of carbon atoms is preferably 7, more preferably 6, and further preferably 5.

The non-fluorinated cyclic ether is preferably represented by the following formula (2).

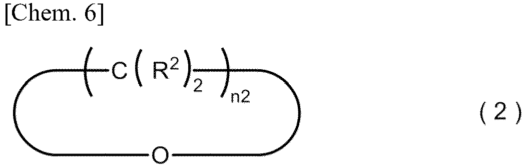

(In formula (2), each R² is independently a hydrogen atom or an alkyl group having 1 to 4 carbon atoms. n2 is an integer of 2 to 5.)

When R² in formula (2) above is an alkyl group, the number of carbon atoms is preferably 3 or less, and more preferably 2 or less. R² in formula (2) above is preferably a hydrogen atom. n2 is preferably 4 or 5, and more preferably 4.

Examples of the non-fluorinated cyclic ether include tetrahydrofuran and tetrahydropyran. As the non-fluorinated cyclic ether, one type or two or more types can be used.

The lower limit of the content of the non-fluorinated cyclic ether with respect to the total of the ionic liquid and the non-aqueous solvent is preferably 5% by volume, more preferably 10% by volume, and further preferably 20% by volume. By setting the above content at or above the above lower limit, the high-rate discharge performance of the non-aqueous electrolyte energy storage device can be further enhanced, among other things. The lower limit of the above content may be 30% by volume or 40% by volume. The upper limit of the content of the non-fluorinated cyclic ether with respect to the total of the ionic liquid and the non-aqueous solvent is preferably 90% by volume, and may be 80% by volume, 70% by volume, 60% by volume, 50% by volume, 40% by volume, 30% by volume, 25% by volume, or 20% by volume. By setting the above content to be the above upper limit or less, the discharge capacity of the non-aqueous electrolyte energy storage device tends to become larger, and the capacity retention ratio after charge-discharge cycles also tends to increase.

The chain ether may be a fluorinated chain ether or a non-fluorinated chain ether, but is preferably a fluorinated chain ether. The chain ether may be composed of only carbon, hydrogen, and oxygen elements, or may be composed only of carbon, hydrogen, and oxygen, and fluorine elements. It is preferable that the oxygen element possessed by the chain ether is only an oxygen element constituting an ether bond. That is, it is preferable that the chain ether does not have an oxygen element-containing substituent such as a hydroxy group or a carboxy group. The chain ether may be a monoether, a diether, a triether, and the like, but is preferably a diether. The chain ether may be a fluorinated chain diether. The chain ether is preferably a saturated ether.

The lower limit of the number of carbon atoms in the chain ether is preferably 3, more preferably 4, and further preferably 5. The upper limit of the above number of carbon atoms is preferably 8, more preferably 7, and further preferably 6. The lower limit of the number of fluorine atoms in the chain ether is preferably 2, and more preferably 3. The upper limit of the above number of fluorine atoms is preferably 8, and further preferably 7, 6, 5, 4, or 3.

The chain ether is preferably represented by the following formula (3).

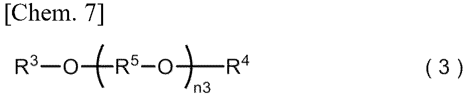

(In formula (3), each of R³ and R⁴ is independently an alkyl group having 1 to 3 carbon atoms or a fluorinated alkyl group having 1 to 3 carbon atoms. R⁵ is an alkanediyl group having 1 to 3 carbon atoms. n3 is 0 or 1.)

R³ in formula (3) above is preferably an alkyl group, and more preferably a methyl group or an ethyl group. R⁴ is preferably a fluorinated alkyl group, more preferably a fluorinated methyl group or a fluorinated ethyl group, further preferably a fluorinated ethyl group, and still more preferably a 2,2,2-trifluoroethyl group. R⁵ is preferably -(CH₂)ₘ- (m is an integer of 1 to 3), and more preferably -CH₂CH₂-. n3 is preferably 1.

Examples of the chain ether include 2-(2,2,2-trifluoroethoxy)ethyl methyl ether, ethyl-2-(2,2,2-trifluoroethoxy)ethyl ether, 2-(2,2-difluoroethoxy)ethyl methyl ether, ethyl-2-(2,2-difluoroethoxy)ethyl ether, 2-(2-fluoroethoxy)ethyl methyl ether, ethyl-2-(2-fluoroethoxy)ethyl ether, and 1,1,2,2-tetrafluoroethyl-2,2,3,3-tetrafluoropropyl ether. As the chain ether, one type or two or more types can be used.

The lower limit of the content of the chain ether with respect to the total of the ionic liquid and the non-aqueous solvent is preferably 5% by volume, more preferably 10% by volume, and further preferably 20% by volume. By setting the above content at or above the above lower limit, the high-rate discharge performance of the non-aqueous electrolyte energy storage device can be further enhanced, among other things. The lower limit of the above content may be 30% by volume, 40% by volume, 50% by volume, 60% by volume, or 70% by volume. The upper limit of the content of the chain ether with respect to the total of the ionic liquid and the non-aqueous solvent is preferably 90% by volume, and may be 80% by volume, 70% by volume, 60% by volume, 50% by volume, 40% by volume, 30% by volume, 25% by volume, or 20% by volume. By setting the above content to be the above upper limit or less, the discharge capacity of the non-aqueous electrolyte energy storage device tends to become larger, and the capacity retention ratio after charge-discharge cycles also tends to increase.

The lower limit of the total content of the non-fluorinated cyclic ether and the chain ether with respect to the total of the ionic liquid and the non-aqueous solvent is preferably 5% by volume, more preferably 10% by volume, and further preferably 20% by volume. By setting the above total content at or above the above lower limit, the high-rate discharge performance of the non-aqueous electrolyte energy storage device can be further enhanced, among other things. The lower limit of the above total content may be 30% by volume, 40% by volume, 50% by volume, 60% by volume, or 70% by volume. The upper limit of the total content of the non-fluorinated cyclic ether and the chain ether with respect to the total of the ionic liquid and the non-aqueous solvent is preferably 90% by volume, and may be 80% by volume, 70% by volume, 60% by volume, 50% by volume, 40% by volume, 30% by volume, 25% by volume, or 20% by volume. By setting the above total content to be the above upper limit or less, the discharge capacity of the non-aqueous electrolyte energy storage device tends to become larger, and the capacity retention ratio after charge-discharge cycles also tends to increase.

When the other non-aqueous solvent is a non-aqueous solvent other than the fluorinated cyclic ether represented by formula (1) above, the lower limit of the content of the other non-aqueous solvent (the non-aqueous solvent other than the fluorinated cyclic ether represented by formula (1) above) with respect to the total of the ionic liquid and the non-aqueous solvent is preferably 5% by volume, more preferably 10% by volume, and further preferably 20% by volume. By setting the above content at or above the above lower limit, the high-rate discharge performance of the non-aqueous electrolyte energy storage device can be further enhanced, among other things. The lower limit of the above content may be 30% by volume, 40% by volume, 50% by volume, 60% by volume, or 70% by volume. The upper limit of the content of the other non-aqueous solvent (the non-aqueous solvent other than the fluorinated cyclic ether represented by formula (1) above) with respect to the total of the ionic liquid and the non-aqueous solvent is preferably 90% by volume, and may be 80% by volume, 70% by volume, 60% by volume, 50% by volume, 40% by volume, 30% by volume, 25% by volume, or 20% by volume. By setting the above content at or below the above upper limit, it is possible to increase the discharge capacity of the non-aqueous electrolyte energy storage device and to increase the capacity retention ratio after charge-discharge cycles, among other things.

The non-aqueous solvent is preferably mainly composed of ether. The content of ether (the total of fluorinated cyclic ether, non-fluorinated cyclic ether, and chain ether) in the non-aqueous solvent may be 90% by volume or more, or may be 95% by volume or more or 99% by volume or more. As described above, since the non-aqueous solvent is mainly composed of ether, the discharge capacity of the non-aqueous electrolyte energy storage device tends to become larger. The upper limit of the content of ether in the non-aqueous solvent may be 100% by volume. In one embodiment of the present invention, the non-aqueous solvent may be composed essentially only of ether, or the non-aqueous solvent may consist only of ether.

The total content of the ionic liquid and the ether (the total of fluorinated cyclic ether, non-fluorinated cyclic ether, and chain ether) with respect to the total of the ionic liquid and the non-aqueous solvent may be 90% by volume or more, and may be 95% by volume or more or 99% by volume or more. The upper limit of the above total content may be 100% by volume.

The total content of the ionic liquid and the ether (the total of fluorinated cyclic ether, non-fluorinated cyclic ether, and chain ether) with respect to all the components other than the electrolyte salt in the non-aqueous electrolyte may be 90% by volume or more, and may be 95% by volume or more or 99% by volume or more. As described above, since the non-aqueous electrolyte is mainly composed of the electrolyte salt, the ionic liquid, and the ether as the non-aqueous solvent, the discharge capacity of the non-aqueous electrolyte energy storage device tends to become larger. The upper limit of the above total content may be 100% by volume.

The non-aqueous electrolyte may contain other components in addition to the electrolyte salt, the ionic liquid, and the non-aqueous solvent. Examples of the other components include additives.

As the additive, one type or two or more types can be used. When an additive is used in the non-aqueous electrolyte, the content of the additive in the non-aqueous electrolyte is preferably 0.01% by mass or more and 10% by mass or less, more preferably 0.1% by mass or more and 7% by mass or less, further preferably 0.2% by mass or more and 5% by mass or less, and particularly preferably 0.3% by mass or more and 3% by mass or less.

The upper limit of the viscosity of the non-aqueous electrolyte at 25 °C is preferably 19 mPa·s, more preferably 18 mPa·s, further preferably 17 mPa·s, still more preferably 16 mPa·s, and may be 15 mPa·s, 14 mPa·s, 13 mPa·s, 12 mPa·s, 11 mPa·s, or 10 mPa·s. With the viscosity of the non-aqueous electrolyte at or below the above upper limit, the high-rate discharge performance of the non-aqueous electrolyte energy storage device tends to be further enhanced. The lower limit of the above viscosity may be, for example, 1 mPa·s, and may be 3 mPa·s, 5 mPa·s, 7 mPa·s, 9 mPa·s, or 10 mPa·s.

### (Container)

The container houses the electrode body and the non-aqueous electrolyte in the internal space. As the material of the container, a metal material such as aluminum or stainless steel, a resin material, or the like is used, and the metal material is preferable from the viewpoint of strength and the like. A composite material of a metal material and a resin material, or the like, can also be used.

The shape of the container is not particularly limited, but can be cylindrical, rectangular parallelepiped (prismatic), disk-shaped, or the like. The container may have a shape such as a sheet, formed of a metal-resin composite film.

### (Shape, Application, etc. of Non-Aqueous Electrolyte Energy Storage Device)

The shape of the non-aqueous electrolyte energy storage device according to one embodiment of the present invention is not particularly limited. The non-aqueous electrolyte energy storage device may be, for example, a cylindrical battery, a prismatic battery, a flat battery, a coin-type battery, a button-type battery, or the like.

The application of the non-aqueous electrolyte energy storage device according to one embodiment of the present invention is not particularly limited. The non-aqueous electrolyte energy storage device can be used for, for example, power supplies for automobiles such as electric vehicles, hybrid vehicles, and plug-in hybrid vehicles, power supplies for electronic devices such as personal computers and communication terminals, and power supplies for power storage.

The non-aqueous electrolyte energy storage device of the present invention is used singly or in a plurality of units. The non-aqueous electrolyte energy storage device may be used singly when the required output and the required voltage are low. On the other hand, when at least one of the required output or the required voltage is large, the non-aqueous electrolyte energy storage device may be used as an energy storage apparatus combined with other non-aqueous electrolyte energy storage devices. In an energy storage apparatus in which a plurality of non-aqueous electrolyte energy storage devices are combined, at least one non-aqueous electrolyte energy storage device included in the energy storage apparatus may be the non-aqueous electrolyte energy storage device according to one embodiment of the present invention. The energy storage apparatus will be described in detail below.

The non-aqueous electrolyte energy storage device according to one embodiment of the present invention may be constrained, for example, such that the container maintains a certain thickness, or may be unconstrained. Further, it may be constrained such that a constant load is applied to the container. When the container is constrained, expansion of the container accompanying a charge-discharge cycle or the like is suppressed, and a decrease in charge-discharge performance may be suppressed. When the container is constrained, a load may or may not be applied to the electrode body in the container. For example, the non-aqueous electrolyte energy storage device or the energy storage apparatus may be provided with a constraint member that performs such constraint.

### <Method for Manufacturing Non-Aqueous Electrolyte Energy Storage Device>

A non-aqueous electrolyte energy storage device according to one embodiment of the present invention can be manufactured by a known method. The method for manufacturing the non-aqueous electrolyte energy storage device includes, for example, preparing a positive electrode containing a sulfur-based active material, preparing a negative electrode, preparing a non-aqueous electrolyte containing an electrolyte salt, an ionic liquid, and a non-aqueous solvent, and housing the positive electrode, the negative electrode, and the non-aqueous electrolyte in a container. The manufacturing method may include preparing a separator, manufacturing an electrode body using the positive electrode, the negative electrode, and the separator. The non-aqueous solvent of the non-aqueous electrolyte to be prepared contains a fluorinated cyclic ether. The fluorinated cyclic ether may be a fluorinated cyclic ether represented by formula (1) described above. The non-aqueous solvent may contain a fluorinated cyclic ether represented by formula (1) described above and another non-aqueous solvent. Housing the positive electrode, the negative electrode, and the non-aqueous electrolyte in a container may include housing the electrode body and the non-aqueous electrolyte in the container.

Preparing the positive electrode may be manufacturing the positive electrode. The manufacture of the positive electrode can be performed by the method described above. Preparing the negative electrode may be manufacturing the negative electrode. The manufacture of the negative electrode can be performed by the method described above. Preparing the non-aqueous electrolyte may be formulating the non-aqueous electrolyte. Specific forms and preferred forms of the positive electrode, the negative electrode, the non-aqueous electrolyte, and the like to be prepared are the same as the specific forms and preferred forms of the positive electrode, the negative electrode, the non-aqueous electrolyte, and the like provided in the non-aqueous electrolyte energy storage device according to one embodiment of the present invention described above. The positive electrode, the negative electrode, the separator, the non-aqueous electrolyte, and the like may be prepared by purchase or the like.

Housing the electrode body (or the positive electrode and the negative electrode) and the non-aqueous electrolyte in a container can be performed by a known method. When the non-aqueous electrolyte is a non-aqueous electrolyte solution, for example, the housing can be performed by first housing the electrode body (or the positive electrode and the negative electrode) in the container and then injecting the non-aqueous electrolyte solution from an injection port provided in the container. The injection port is sealed after injection of the non-aqueous electrolyte solution. The method for manufacturing the non-aqueous electrolyte energy storage device may further include performing initial charge and discharge on the assembled uncharged and undischarged energy storage device. In the manufacturing method, the initial charge and discharge usually starts from discharge. The number of times of charging and discharging in the initial charge and discharge is not particularly limited.

The non-aqueous electrolyte energy storage device according to one embodiment of the present invention may be manufactured by other methods.

### <Energy Storage Apparatus>

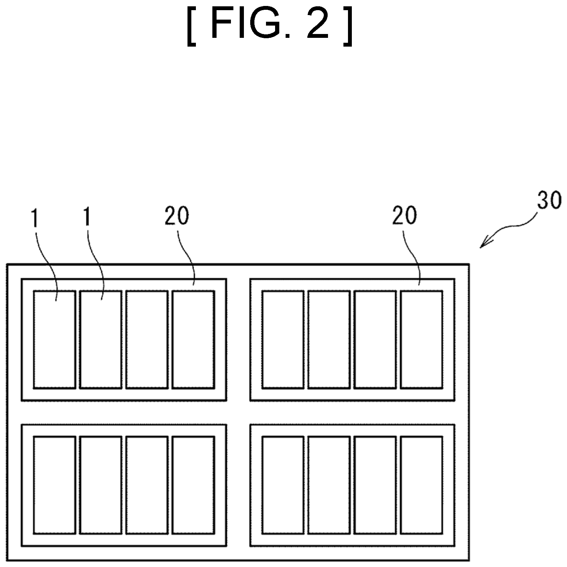

An energy storage apparatus 30 in Fig. 2 includes a plurality of energy storage units 20. Each energy storage unit 20 includes a plurality of non-aqueous electrolyte energy storage devices 1 electrically connected to each other. The energy storage apparatus 30 may include a bus bar (not illustrated) for electrically connecting a plurality of non-aqueous electrolyte energy storage devices 1, a bus bar (not illustrated) for electrically connecting a plurality of energy storage units 20, and the like. The energy storage unit 20 or the energy storage apparatus 30 may include a state monitoring device (not illustrated) for monitoring the state of one or more non-aqueous electrolyte energy storage devices 1.

### <Other Embodiments>

The non-aqueous electrolyte energy storage device and the method for manufacturing the non-aqueous electrolyte energy storage device of the present invention are not limited to the above-described embodiments, and various changes may be made within a range not departing from the gist of the present invention. For example, the configuration of one embodiment can be added to the configuration of another embodiment, and a part of the configuration of one embodiment can be replaced with the configuration of another embodiment or a well-known technique. Furthermore, a part of the configuration of one embodiment can be deleted. In addition, a well-known technique can be added to the configuration of one embodiment.

In the above embodiment, a case where the non-aqueous electrolyte energy storage device is used as a non-aqueous electrolyte secondary battery that can be charged and discharged has been described, but the type, shape, dimensions, capacity, and the like of the non-aqueous electrolyte energy storage device are arbitrary. The present invention can also be applied to various secondary batteries and capacitors such as electric double-layer capacitors and lithium-ion capacitors.

In the above embodiment, an electrode body in which a separator is interposed between a positive electrode and a negative electrode has been described, but the electrode body does not have to be provided with a separator. For example, the positive electrode and the negative electrode may be in direct contact in a state where a layer having no conductivity is formed on an active material layer of the positive electrode or the negative electrode. As described above, the positive electrode and the negative electrode may further have a layer other than the substrate, the intermediate layer, and the active material layer. Further, the positive electrode and the negative electrode do not have to have a layered structure.

### Examples

Hereinafter, the present invention will be described more specifically by way of examples, but the present invention is not limited to the following examples.

Components used for preparation of non-aqueous electrolytes of Examples and Comparative Examples are shown below. In addition, the donor number determined by the method described above and the viscosity at 25 °C of the ionic liquid and the non-aqueous solvent are also shown together.
(Electrolyte Salt)
LiFSI: lithium bis(fluorosulfonyl)imide
(Ionic Liquid)
Py13FSI: 1-methyl-1-propylpyrrolidinium bis(fluorosulfonyl)imide (donor number 13.0, viscosity 41.1 mPa·s)
(Non-Aqueous Solvent)
TFTHF: 3,3,4,4-tetrafluorotetrahydrofuran (donor number 13.2, viscosity 1.01 mPa·s)
THF: tetrahydrofuran (donor number 23.8, viscosity 0.82 mPa·s)
THP: tetrahydropyran (donor number 22.5, viscosity 0.84 mPa·s)
TFEME: 2-(2,2,2-trifluoroethoxy)ethyl methyl ether (donor number 18.7, viscosity 0.82 mPa·s)
ETFEEE: ethyl-2-(2,2,2-trifluoroethoxy)ethyl ether (donor number 17.2, viscosity not measured)
TFETFPE: 1,1,2,2-tetrafluoroethyl-2,2,3,3-tetrafluoropropyl ether (donor number not measured, viscosity not measured)

### [Example 1]

### (Production of Positive Electrode)

Elemental sulfur, which is a sulfur-based active material, and porous carbon were mixed at a mass ratio of 70:30. This mixture was placed in a sealed electric furnace. After argon flow was performed for 1 hour, the temperature was raised to 150 °C at a temperature rising rate of 5 °C/min, maintained for 5 hours, and then allowed to cool to 80 °C, which is a temperature at which elemental sulfur solidifies. Thereafter, a heat treatment was performed in which the temperature was raised again to 300 °C at a temperature rising rate of 5 °C/min and maintained for 2 hours, thereby producing a composite (sulfur-porous carbon composite: SPC).

Using water as a dispersion medium, a positive electrode mixture paste containing the composite obtained above, acetylene black and carbon nanotubes as conductive agents, carboxymethyl cellulose as a dispersant, polyacrylic acid as a thickener, and styrene-butadiene rubber as a binder was applied to a positive electrode substrate made of aluminum (average thickness 15 µm), and dried. The coating amount of the positive electrode mixture paste was adjusted so that the mass per unit area of the positive electrode active material layer after drying of the dispersion medium was 10 mg/cm². Through the above steps, a positive electrode in which the positive electrode active material layer was laminated on the positive electrode substrate was obtained.

### (Preparation of Negative Electrode)

As a negative electrode, a pure metallic lithium foil (average thickness 600 µm) was prepared.

### (Preparation of Non-Aqueous Electrolyte)

A non-aqueous electrolyte was prepared by causing LiFSI, which is an electrolyte salt a liquid, to be contained at a molality of 1.5 mol/kg in a liquid obtained by mixing Py13FSI, which is an ionic liquid, and TFTHF, which is a non-aqueous solvent, at a volume ratio of 70:30.

### (Assembly of Non-Aqueous Electrolyte Energy Storage Device)

As a separator, a separator in which inorganic particle layers were laminated on both surfaces of a microporous film made of polyethylene and which had high wettability so that the non-aqueous electrolyte soaked into the pores was prepared. Using the positive electrode, the negative electrode, the separator, and the non-aqueous electrolyte, a non-aqueous electrolyte energy storage device of Example 1 was obtained.

### [Examples 2 to 17 and Comparative Examples 1 to 5]

Non-aqueous electrolyte energy storage devices of Examples 2 to 17 and Comparative Examples 1 to 5 were obtained in the same manner as in Example 1, except that the composition of the non-aqueous electrolyte was as shown in Table 1.

### [Evaluation]

### (Initial Charge and Discharge)

For each non-aqueous electrolyte energy storage device of Examples and Comparative Examples for which the test condition for discharge capacity in Table 1 is "A", the following initial charge and discharge were performed in a constant-temperature chamber at 25 °C. First, constant-current (CC) discharge was performed as a first discharge under conditions of a discharge current of 0.1 C and an end-of-discharge voltage of 1.0 V. Thereafter, constant-current constant-voltage (CCCV) charge was performed as a first charge under conditions of a charge current of 0.05 C and an end-of-charge voltage of 3.0 V until the total charge time was 30 hours. Next, constant-current (CC) discharge was performed as a second discharge under conditions of a discharge current of 0.1 C and an end-of-discharge voltage of 1.0 V. 1 C was defined as 1675 mAh/g. Further, a rest of 10 minutes was provided after the first discharge and after the first charge.

For each non-aqueous electrolyte energy storage device of Examples and Comparative Examples for which the test condition for discharge capacity in Table 1 is "B", the following initial charge and discharge were performed in a constant-temperature chamber at 25 °C. First, constant-current (CC) discharge was performed as a first discharge under conditions of a discharge current of 0.05 C and an end-of-discharge voltage of 1.0 V. Thereafter, constant-current constant-voltage (CCCV) charge was performed as a first charge under conditions of a charge current of 0.05 C and an end-of-charge voltage of 3.0 V until the total charge time was 30 hours. Next, constant-current (CC) discharge was performed as a second discharge under conditions of a discharge current of 0.05 C and an end-of-discharge voltage of 1.0 V. 1 C was defined as 1675 mAh/g. Further, a rest of 10 minutes was provided after the first discharge and after the first charge.

The amount of electricity (discharge capacity) in the second discharge was divided by the mass of the sulfur-based active material (elemental sulfur) to determine the discharge capacity. Each discharge capacity is shown in Table 1.

### (Charge-Discharge Cycle Test)

For each non-aqueous electrolyte energy storage device of Examples 1 to 17 and Comparative Examples 1 to 3 that had been subjected to initial charge and discharge, the following charge-discharge cycle test was performed in a constant-temperature chamber at 25 °C. Note that for the non-aqueous electrolyte energy storage devices of Comparative Examples 4 and 5, the charge-discharge cycle test was not performed because short circuits occurred during the initial charge and discharge. Constant-current constant-voltage (CCCV) charge was performed under conditions of a charge current of 0.05 C and an end-of-charge voltage of 3.0 V until the total charge time was 30 hours. Next, constant-current (CC) discharge was performed with a discharge current of 0.1 C and an end-of-discharge voltage of 1.0 V. A rest of 10 minutes was provided after charging and after discharging. The above charging and discharging were carried out for 5 cycles.

As the capacity retention ratio after the charge-discharge cycles, the percentage of the discharge capacity in the fifth cycle relative to the discharge capacity in the first cycle in the above "charge-discharge cycle test" was determined. The results are shown in Table 1.

### (High-Rate Discharge Test)

For each non-aqueous electrolyte energy storage device of Examples 3 to 10, 12, and 15 that had been subjected to initial charge and discharge, a discharge test at 0.05 C was first performed in a constant-temperature chamber at 25 °C in the following manner. Constant-current constant-voltage (CCCV) charge was performed under conditions of a charge current of 0.05 C and an end-of-charge voltage of 3.0 V until the total charge time was 30 hours. Next, constant-current (CC) discharge was performed with a discharge current of 0.05 C and an end-of-discharge voltage of 1.0 V. Subsequently, a high-rate discharge test at 0.5 C was performed in a constant-temperature chamber at 25 °C in the following manner. Constant-current constant-voltage (CCCV) charge was performed under conditions of a charge current of 0.05 C and an end-of-charge voltage of 3.0 V until the total charge time was 30 hours. Next, constant-current (CC) discharge was performed with a discharge current of 0.5 C and an end-of-discharge voltage of 1.0 V. A rest of 10 minutes was provided after charging and after discharging, respectively. As the high-rate discharge performance, the percentage of the discharge capacity at a discharge current of 0.5 C relative to the discharge capacity at a discharge current of 0.05 C was determined. The results are shown in Table 1.

**[Table 1]**

| | Non-aqueous electrolyte | Discharge capacity | | Capacity retention rate | High rate discharge performance |
|---|---|---|---|---|---|
| | | mAh/g | Test condition | % | % |
| Example 1 | 1.5 mol/kg LiFSI in Py13FSI / TFTHF = 70 / 30 vol% | 1754 | A | 94 | - |
| Example 2 | 1.5 mol/kg LiFSI in Py13FSI / TFTHF = 50 / 50 vol% | 1751 | A | 98 | - |
| Example 3 | 1.5 mol/kg LiFSI in Py13FSI / TFTHF = 30 / 70 vol% | 1752 | A | 97 | 59 |
| Example 4 | 1.5 mol/kg LiFSI in Py13FSI / TFTHF / TFEME = 30 / 50 / 20 vol% | 1744 | A | 97 | 83 |
| Example 5 | 1.5 mol/kg LiFSI in Py13FSI / TFTHF / TFEME = 20 / 60 / 20 vol% | 1784 | B | - | 86 |
| Example 6 | 1.5 mol/kg LiFSI in Py13FSI / TFTHF / TFEME = 10 / 70 / 20 vol% | 1739 | B | 96 | 87 |
| Example 7 | 1.5 mol/kg LiFSI in Py13FSI / TFTHF / TFEME = 10 / 50 / 40 vol% | 1765 | B | 97 | 91 |
| Example 8 | 1.5 mol/kg LiFSI in Py13FSI / TFTHF / TFEME = 10 / 30 / 60 vol% | 1742 | B | 94 | 90 |
| Example 9 | 1.5 mol/kg LiFSI in Py13FSI / TFTHF / TFEME = 10 / 10 / 80 vol% | 1607 | B | 62 | 91 |
| Example 10 | 1.5 mol/kg LiFSI in Py13FSI / TFTHF / ETFEEE = 10 / 70 / 20 vol% | 1771 | B | 96 | 88 |
| Example 11 | 1.5 mol/kg LiFSI in Py13FSI / TFTHF / THF = 30 / 50 / 20 vol% | 1739 | A | 98 | - |
| Example 12 | 1.5 mol/kg LiFSI in Py13FSI / TFTHF / THF = 10 / 70 / 20 vol% | 1763 | B | 97 | 91 |
| Example 13 | 1.5 mol/kg LiFSI in Py13FSI / TFTHF / THF = 10 / 50 / 40 vol% | 1687 | A | 6 | - |
| Example 14 | 1.5 mol/kg LiFSI in Py13FSI / TFTHF / THP = 30 / 50 / 20 vol% | 1744 | B | 97 | - |
| Example 15 | 1.5 mol/kg LiFSI in Py13FSI / TFTHF / THP = 10 / 70 / 20 vol% | 1769 | B | 96 | 85 |
| Example 16 | 1.5 mol/kg LiFSI in Py13FSI / TFTHF / THP = 30 / 30 / 40 vol% | 1719 | B | 37 | - |
| Example 17 | 2.0 mol/kg LiFSI in Py13FSI / TFTHF = 70 / 30 vol% | 1726 | A | 95 | - |
| Comparative Example 1 | 1.6 mol/kg LiFSI in Py13FSI / TFETFPE = 70 / 30 vol% | 1223 | A | *1 | - |
| Comparative Example 2 | 1.5 mol/kg LiFSI in Py13FSI / TFEME = 70 / 30 vol% | 1411 | A | 16 | - |
| Comparative Example 3 | 1.5 mol/kg LiFSI in Py13FSI / TFEME = 30 / 70 vol% | 1491 | A | 4 | - |
| Comparative Example 4 | 1.5 mol/kg LiFSI in Py13FSI / THF = 30 / 70 vol% | 55 | B | *2 | - |
| Comparative Example 5 | 1.5 mol/kg LiFSI in Py13FSI / THP = 30 / 70 vol% | 145 | B | *2 | - |

| | | | | | |
|---|---|---|---|---|---|
| *1: Short circuit at second cycle *2: Short circuit during initial charge and discharge | | | | | |

As shown in Table 1, the non-aqueous electrolyte energy storage devices of Examples 1 to 17 in which the non-aqueous solvent contained a fluorinated cyclic ether each had a discharge capacity of 1,600 mAh/g or more, indicating a large discharge capacity. Among the non-aqueous electrolyte energy storage devices of the Examples, the non-aqueous electrolyte energy storage devices of Examples 1 to 8 and 10 to 17, in which the total content of the ionic liquid and the fluorinated cyclic ether was 30% by volume or more with respect to the total of the ionic liquid and the non-aqueous solvent, each had a discharge capacity of 1,650 mAh/g or more. When comparing cases where non-aqueous solvents of the same type were used, the capacity retention ratio after charge-discharge cycles also tended to increase as the total content of the ionic liquid and the fluorinated cyclic ether with respect to the total of the ionic liquid and the non-aqueous solvent increased. Further, from the comparison of Examples 3 to 10, 12, and 15, it was confirmed that high-rate discharge performance was enhanced by further inclusion, in the non-aqueous solvent, of at least one selected from the group consisting of non-fluorinated cyclic ethers and chain ethers.

When the non-aqueous electrolyte energy storage devices of Example 1 and Comparative Example 2 after the above charge-discharge cycle test were disassembled, what was presumed to be a polysulfide was found to be deposited on the surface of the separator of the non-aqueous electrolyte energy storage device of Comparative Example 2 on the side facing the positive electrode, whereas in the non-aqueous electrolyte energy storage device of Example 1, almost no such deposit was generated. In the non-aqueous electrolyte energy storage device of Example 1, it is considered that dissolution of polysulfides from the positive electrode into the non-aqueous electrolyte was suppressed.

Further, as shown in Table 1, the non-aqueous electrolyte energy storage devices of Examples in which the non-aqueous solvent contained the fluorinated cyclic ether represented by formula (1) above and another non-aqueous solvent exhibited higher high-rate discharge performance than the non-aqueous electrolyte energy storage device of Example 3 in which the non-aqueous solvent did not contain another non-aqueous solvent.

From the comparison of the non-aqueous electrolyte energy storage device of Example 3 with each of the non-aqueous electrolyte energy storage devices of Comparative Examples 3 to 5, it was confirmed that when the non-aqueous solvent contained the fluorinated cyclic ether represented by formula (1) above, performance such as the discharge capacity and the capacity retention ratio after charge-discharge cycles of the non-aqueous electrolyte energy storage device tended to be improved.

### INDUSTRIAL APPLICABILITY

The present invention can be applied to a non-aqueous electrolyte energy storage device used as a power supply for electronic devices such as personal computers and communication terminals, for automobiles, for industrial use, and the like.

### DESCRIPTION OF REFERENCE NUMERALS

1 Non-aqueous electrolyte energy storage device
2 Electrode body
3 Container
4 Positive electrode lead
5 Positive electrode external terminal
6 Negative electrode lead
7 Negative electrode external terminal
20 Energy storage unit
30 Energy storage apparatus

## Claims

1. A non-aqueous electrolyte energy storage device comprising:
a positive electrode containing a sulfur-based active material; and
a non-aqueous electrolyte containing an electrolyte salt, an ionic liquid, and a non-aqueous solvent,
wherein the non-aqueous solvent contains a fluorinated cyclic ether.

2. The non-aqueous electrolyte energy storage device according to claim 1,
wherein a total content of the ionic liquid and the fluorinated cyclic ether with respect to a total of the ionic liquid and the non-aqueous solvent is not less than 10% by volume.

3. The non-aqueous electrolyte energy storage device according to claim 1 or 2,
wherein the fluorinated cyclic ether is represented by the following formula (1): 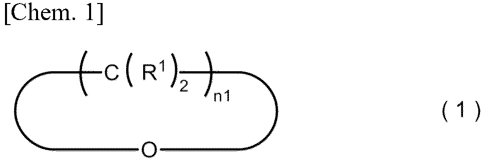
wherein, in formula (1), each R¹ is independently a hydrogen atom, a fluorine atom, an alkyl group having 1 to 4 carbon atoms, or a fluorinated alkyl group having 1 to 4 carbon atoms;
provided that at least one of the plurality of R¹ is a fluorine atom or a fluorinated alkyl group having 1 to 4 carbon atoms; and
n1 is an integer of 2 to 5.

4. The non-aqueous electrolyte energy storage device according to claim 3, wherein the non-aqueous solvent further contains another non-aqueous solvent.

5. The non-aqueous electrolyte energy storage device according to claim 4, wherein a donor number of the other non-aqueous solvent is not less than 14 and not more than 30.

6. The non-aqueous electrolyte energy storage device according to claim 4, wherein a viscosity of the other non-aqueous solvent at 25 °C is less than 1.0 mPa.

7. The non-aqueous electrolyte energy storage device according to claim 1 or 2, wherein the non-aqueous solvent further contains at least one selected from the group consisting of a non-fluorinated cyclic ether and a chain ether.

8. The non-aqueous electrolyte energy storage device according to claim 7, wherein a total content of the non-fluorinated cyclic ether and the chain ether with respect to a total of the ionic liquid and the non-aqueous solvent is not more than 90% by volume.

9. The non-aqueous electrolyte energy storage device according to claim 7,
wherein the non-fluorinated cyclic ether is represented by the following formula (2), and the chain ether is represented by the following formula (3): 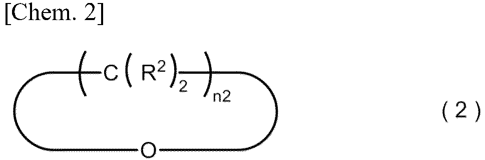
wherein, in formula (2), each R² is independently a hydrogen atom or an alkyl group having 1 to 4 carbon atoms; and
n2 is an integer of 2 to 5, 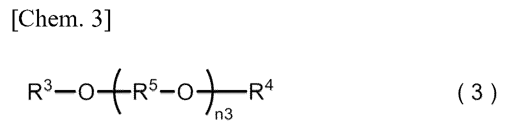
wherein, in formula (3), each of R³ and R⁴ is independently an alkyl group having 1 to 3 carbon atoms or a fluorinated alkyl group having 1 to 3 carbon atoms;
R⁵ is an alkanediyl group having 1 to 3 carbon atoms; and
n3 is 0 or 1.

10. The non-aqueous electrolyte energy storage device according to claim 1 or 2, wherein the ionic liquid has at least one selected from the group consisting of a quaternary ammonium cation, an imidazolium-based cation, a pyrrolidinium-based cation, a piperidinium-based cation, a quaternary phosphonium cation, and a sulfonium cation.

11. The non-aqueous electrolyte energy storage device according to claim 1 or 2, wherein the ionic liquid has an imide anion.

12. The non-aqueous electrolyte energy storage device according to claim 1 or 2, wherein the electrolyte salt is an imide salt.

13. The non-aqueous electrolyte energy storage device according to claim 1 or 2, further comprising a negative electrode containing metallic lithium at least in a charged state.

14. A method for manufacturing a non-aqueous electrolyte energy storage device, comprising:
preparing a positive electrode containing a sulfur-based active material; and
preparing a non-aqueous electrolyte containing an electrolyte salt, an ionic liquid, and a non-aqueous solvent,
wherein the non-aqueous solvent contains a fluorinated cyclic ether.

15. The method for manufacturing a non-aqueous electrolyte energy storage device according to claim 14,
wherein the non-aqueous solvent further contains another non-aqueous solvent and a fluorinated cyclic ether represented by the following formula (1): 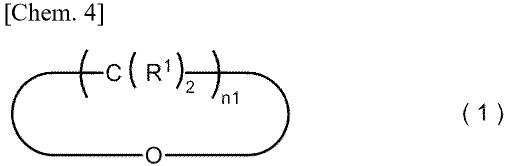
wherein, in formula (1), each R¹ is independently a hydrogen atom, a fluorine atom, an alkyl group having 1 to 4 carbon atoms, or a fluorinated alkyl group having 1 to 4 carbon atoms;
provided that at least one of the plurality of R¹ is a fluorine atom or a fluorinated alkyl group having 1 to 4 carbon atoms; and
n1 is an integer of 2 to 5.
